# EUROPEAN PATENT SPECIFICATION

(11) **EP 4 618 294 B1**
(45) Date of publication and mention of the grant of the patent: **25.11.2026**
(21) Application number: 25162726.1
(22) Date of filing: 10.03.2025
(51) Int. Cl.: H01M 50/46, H01M 10/0525, H01M 10/0587, H01M 50/417, H01M 50/434, H01M 50/44, H01M 50/443, H01M 50/491, H01M 50/457

(54) **SECONDARY BATTERY AND ELECTRONIC APPARATUS**
SEKUNDÄRBATTERIE UND ELEKTRONISCHE VORRICHTUNG
BATTERIE SECONDAIRE ET APPAREIL ÉLECTRONIQUE

(30) Priority: 11.03.2024 CN 202410276081
(43) Date of publication of application: 17.09.2025
(73) Proprietor: NINGDE AMPEREX TECHNOLOGY LIMITED, Ningde City, Fujian Province 352100 (CN)
(72) Inventor: YAO, Meina, Ningde City, Fujian Province, China, 352100 (CN)
(74) Representative: Icosa

(56) References cited:
- KR-A- 20150 101 136
- US-A1- 2022 190 442

## Description

### TECHNICAL FIELD

This application relates to the field of electrochemical technologies, and in particular, to a secondary battery and an electronic apparatus.

### BACKGROUND

Lithium-ion batteries have been widely used in fields such as aviation, aerospace, navigation, and electric vehicles due to their advantages such as high energy density, long cycle life, low self-discharge, and environmental friendliness. The performance of the separator in lithium-ion batteries determines the interface structure, internal resistance, and the like of lithium-ion batteries, and directly affects the capacity, cycling, and safety performance of lithium-ion batteries. A high-performance separator plays an important role in improving the overall performance of lithium-ion batteries.

A separator includes a base film and an bonding layer. Commonly used base films include polyolefin microporous films or non-woven fabric films, and polyolefin microporous films include polypropylene (PP) microporous films or polyethylene (PE) microporous films. Non-woven fabric films are thicker than polyolefin microporous films, which reduces the energy density of lithium-ion batteries. The bonding layer includes polyvinylidene fluoride (PVDF), polyvinylidene fluoride-hexafluoropropylene copolymer (PVDF-HFP), polyimide (PI), polyvinyl alcohol (PVA), or sodium carboxymethyl cellulose (CMC-Na). PVDF and PVDF-HFP have good compatibility with the electrolyte and good adhesion to electrode plates, but have low melting points ranging from 115°C to 170°C, and melt at higher temperatures, leading to ineffective adhesion to active substance particles on the electrode plates. PI, PVA, and CMC-Na have higher melting points, with melting points greater than 200°C, which can improve the thermal stability of the separator at high temperatures, but they cannot produce effective swelling, which cannot effectively improve adhesion and ionic conductivity, reducing the electrochemical performance of lithium-ion batteries.
D1 KR 2015 0101136
D2 US 2022/190442
D1 refers to a wound electrode assembly including a porous and a non-woven separator, which include adhesive layers.
D2 refers to a wound electrode assembly including two separators and one being coated on both sides with an adhesive layer.

### SUMMARY

An objective of this application is to provide a secondary battery and an electronic apparatus, so that the adhesion between a separator and a positive electrode plate and between the separator and a negative electrode plate can be improved, the cycling performance and high-temperature hot-box performance of the secondary battery can be enhanced, and the secondary battery has a high energy density. Specific technical solutions are as follows.

According to a first aspect, an embodiment of this application provides a secondary battery including an electrode assembly, where the electrode assembly is a wound structure, the electrode assembly includes a positive electrode plate, a negative electrode plate, a first separator, and a second separator, the negative electrode plate is located between the first separator and the second separator, the first separator is located between the positive electrode plate and the negative electrode plate, the first separator includes a first base film and a first bonding layer, the second separator includes a second base film and a second bonding layer, the first bonding layer includes a first binder, and the second bonding layer includes a second binder. The first base film is a non-woven fabric film, and a material of the first base film includes at least one of polyimide, polyamide, polysulfone, polyacrylonitrile, polyester, cellulose, polyether ether ketone, polyphenylene sulfide, polyacrylate, polyethylene terephthalate, polyphthalamide, polyarylether sulfone, aramid, or polysulfonamide. The first binder includes at least one of polyvinylidene fluoride or polyvinylidene fluoride-hexafluoropropylene copolymer. The second base film is a microporous film, a material of the second base film includes polyolefin, and a polymer monomer of the polyolefin includes at least one of ethylene, propylene, 1-butene, 1-pentene, 1-hexene, 1-octene, 4-methyl-1-pentene, cyclobutene, cyclopentene, or cyclohexene. The second binder includes at least one of polyimide, polyvinyl alcohol, or sodium carboxymethyl cellulose.

In this application, the first separator is formed by the non-woven fabric film with high mechanical strength, high glass transition temperature, and high porosity combined with the first bonding layer with high ionic conductivity and low melting point. The combination of the non-woven fabric film capable of storing a large amount of electrolyte with the first bonding layer of high ionic conductivity can improve the cycling performance of the secondary battery. In addition, the non-woven fabric film shrinks little at high temperatures due to its high mechanical strength and high glass transition temperature and can make for the problem that the first bonding layer with a low melting point cannot prevent the base film of the separator from shrinking at high temperatures, thereby improving the high-temperature hot-box performance of the secondary battery. The second separator formed by a microporous film with a low glass transition temperature, thin thickness, and high chemical stability combined with a second bonding layer with a high melting point can make up for the problem of energy density loss caused by a larger thickness of the first separator. In addition, the second bonding layer still having good adhesion at high temperatures can reduce the possibility of the microporous film with a lower melting point shrinking at high temperatures, ensuring good high-temperature hot-box performance of the secondary battery. Since the first separator is thicker and the non-woven fabric film has higher strength, the placement of the first separator between the positive electrode plate and the negative electrode plate can better reduce the possibility of short circuit between the positive electrode plate and the negative electrode plate caused by the shrinkage of the separator at high temperatures and reduce the possibility of short circuit caused by larger positive electrode active substance particles on the positive electrode plate piercing the separator. With the use of the first and second separators of different types in combination in the secondary battery of this application, the adhesion between the separator and the positive electrode plate and between the separator and the negative electrode plate can be improved, the cycling performance and high-temperature hot-box performance of the secondary battery can be enhanced, and the secondary battery has a high energy density.

In an embodiment of this application, a material of the first base film includes polyethylene terephthalate, and the first binder includes polyvinylidene fluoride-hexafluoropropylene copolymer. The material of the second base film includes polyolefin, the polymer monomer of the polyolefin includes at least one of ethylene or propylene, and the second binder includes polyimide. With the use of the material of the first base film, the first binder, the material of the second base film, and the second binder, the first separator is formed by a non-woven fabric film with high mechanical strength, high glass transition temperature, and high porosity combined with the first bonding layer with high ionic conductivity and low melting point. The combination of the non-woven fabric film capable of storing a large amount of electrolyte with the first bonding layer of high ionic conductivity can further improve the cycling performance of the secondary battery. In addition, the non-woven fabric film shrinks little at high temperatures due to its high mechanical strength and high glass transition temperature and can make for the problem that the first bonding layer with a low melting point cannot prevent the base film of the separator from shrinking at high temperatures, thereby further improving the high-temperature hot-box performance of the secondary battery. The second separator formed by a microporous film with a low glass transition temperature, thin thickness, and high chemical stability combined with a second bonding layer with a high melting point can make up for the problem of energy density loss caused by a larger thickness of the first separator. In addition, the second bonding layer still having good adhesion at high temperatures can reduce the possibility of the microporous film with a lower melting point shrinking at high temperatures, further improving high-temperature hot-box performance of the secondary battery.

In an embodiment of this application, the negative electrode plate includes a negative electrode current collector and a first negative electrode material layer and a second negative electrode material layer located on two sides of the negative electrode current collector, where along a winding direction of the electrode assembly, a length of the first negative electrode material layer is greater than a length of the second negative electrode material layer, the first separator is located on one side having the first negative electrode material layer of the negative electrode plate, and the second separator is located on one side having the second negative electrode material layer of the negative electrode plate. In the foregoing arrangement, the first base film has a larger porosity and the first binder has greater swelling. This is conducive to the first separator to store more electrolyte. The first separator located on the side having the first negative electrode material layer of the negative electrode plate is conducive to the adsorption of more electrolyte at side A of the negative electrode plate of the secondary battery, reducing the risk of lithium precipitation at the interface between the electrolyte and the negative electrode plate due to electrolyte bridge cutoff at a later stage of cycling of the secondary battery. In addition, the provision of the foregoing structure in the secondary battery while taking energy density into account is conducive to improving the high-temperature hot-box performance and cycling performance of the secondary battery.

In an embodiment of this application, an average particle size of the first binder is 4 µm to 15 µm, and an average particle size of the second binder is 10 µm to 20 µm. With the average particle size of the first binder and the average particle size of the second binder being controlled within the ranges in this application, the first binder and the second binder have suitable average particle sizes, enabling the first bonding layer slurry in the preparation process of the first bonding layer to have suitable viscosity and the second bonding layer slurry in the preparation process of the second bonding layer to have suitable viscosity. Therefore, the first bonding layer and the second bonding layer have high adhesion; the adhesion between the separator and the positive electrode plate and between the separator and the negative electrode plate can be further improved, and this is conducive to the transport of lithium ions. In this way, the cycling performance of the secondary battery is further improved, and the secondary battery has good high-temperature hot-box performance.

In an embodiment of this application, a coating weight of the first bonding layer is 0.0004 mg/mm² to 0.002 mg/mm², and a coating weight of the second bonding layer is 0.0004 mg/mm² to 0.002 mg/mm². With the coating weight of the first bonding layer and the coating weight of the second bonding layer being controlled within the ranges in this application, the adhesion between the first separator and the positive electrode plate and/or the negative electrode plate and between the second separator and the positive electrode plate and/or the negative electrode plate is high, and the interface between the first separator and the positive electrode plate and/or the negative electrode plate and between the second separator and the positive electrode plate and/or the negative electrode plate can be strengthened, and this is conducive to the transport of lithium ions, thereby further improving the cycling performance of the secondary battery.

In an embodiment of this application, a thickness of the first base film is 10 µm to 15 µm, and a thickness of the second base film is 3 µm to 9 µm. The thickness of the first base film and the thickness of the second base film being controlled within the ranges in this application are conducive to reducing the risk of short circuit in the secondary battery caused by lithium dendrites piercing the second base film during the cycling of the secondary battery. The first base film and the second base film have good mechanical strength and thermal stability and are not prone to shrinkage at high temperatures, so that the high-temperature hot-box performance of the secondary battery can be further improved. Moreover, the transmission distance of lithium ions during the cycling of the secondary battery is moderate, further improving the cycling performance of the secondary battery. In addition, a total thickness of the first base film and the second base film is small, enabling the secondary battery to have a high energy density.

In an embodiment of this application, a porosity of the first base film is 40% to 70%, and a porosity of the second base film is 5% to 50%. With the porosity of the first base film and the porosity of the second base film being controlled within the ranges in this application, the first separator and the second separator have high mechanical strength and good thermal stability, and the high-temperature hot-box performance of the secondary battery can be further improved. In addition, the first and second separators have strong liquid absorption and retention capabilities, and this is conducive to the transport of lithium ions, thereby further improving the cycling performance of the secondary battery.

In an embodiment of this application, the first separator further includes a first ceramic coating located between the first base film and the first bonding layer, and/or the second separator further includes a second ceramic coating located between the second base film and the second bonding layer, the first ceramic coating includes first ceramic particles, the second ceramic coating includes second ceramic particles, and the first ceramic particles and the second ceramic particles are each independently selected from at least one of aluminum oxide, boehmite (γ-AlOOH), silicon oxide, magnesium oxide, titanium oxide, tin oxide, calcium oxide, zirconium oxide, yttrium oxide, silicon carbide, aluminum hydroxide, magnesium hydroxide, or calcium hydroxide. The first separator further includes a first ceramic coating, and/or the second separator further includes a second ceramic coating, and the type of the first ceramic particles in the first ceramic coating and the type of the second ceramic particles in the second ceramic coating are within the range in this application, so that the thermal stability and mechanical strength of the first separator and the second separator can be further improved, effectively reducing the shrinkage of the first separator and the second separator at high temperatures, thereby further improving the high-temperature hot-box performance of the secondary battery.

A second aspect of this application provides an electronic apparatus including the secondary battery according to any one of the foregoing embodiments. Therefore, the electronic apparatus provided in this application has good use performance.

This application has the following beneficial effects.

This application provides a secondary battery and an electronic apparatus. The secondary battery includes an electrode assembly, where the electrode assembly is a wound structure. The electrode assembly includes a positive electrode plate, a negative electrode plate, a first separator, and a second separator. The negative electrode plate is located between the first separator and the second separator. The first separator includes a first base film and a first bonding layer, the second separator includes a second base film and a second bonding layer, the first bonding layer includes a first binder, and the second bonding layer includes a second binder. The first base film is a non-woven fabric film, and a material of the first base film includes at least one of polyimide, polyamide, polysulfone, polyacrylonitrile, polyester, cellulose, polyether ether ketone, polyphenylene sulfide, polyacrylate, polyethylene terephthalate, polyphthalamide, polyarylether sulfone, aramid, or polysulfonamide. The first binder includes at least one of polyvinylidene fluoride or polyvinylidene fluoride-hexafluoropropylene copolymer. The second base film is a microporous film, a material of the second base film includes polyolefin, and a polymer monomer of the polyolefin includes at least one of ethylene, propylene, 1-butene, 1-pentene, 1-hexene, 1-octene, 4-methyl-1-pentene, cyclobutene, cyclopentene, or cyclohexene. The second binder includes at least one of polyimide, polyvinyl alcohol, or sodium carboxymethyl cellulose. The secondary battery of this application uses the first and second separators of different types in combination, which can improve the adhesion between the separator and the positive electrode plate and between the separator and the negative electrode plate, enhance the cycling performance and high-temperature hot-box performance of the secondary battery, and provide the secondary battery with a high energy density.

Certainly, when any product or method of this application is implemented, all advantages described above are not necessarily demonstrated simultaneously.

### BRIEF DESCRIPTION OF DRAWINGS

To describe the technical solutions in some embodiments of this application or in the prior art more clearly, the following briefly describes the accompanying drawings required for describing these embodiments or the prior art. Apparently, the accompanying drawings in the following descriptions show merely some embodiments of this application, and persons of ordinary skill in the art may still derive other embodiments from these accompanying drawings.
FIG. 1 is a schematic structural diagram of an electrode assembly according to an embodiment of this application;
FIG. 2 is a schematic structural diagram of an electrode assembly according to another embodiment of this application;
FIG. 3 is a schematic structural diagram of an electrode assembly according to a yet another embodiment of this application;
FIG. 4 is a schematic structural diagram of an electrode assembly according to a yet another embodiment of this application; and
FIG. 5 is a schematic structural diagram of an electrode assembly according to a yet another embodiment of this application.

Reference signs:
electrode assembly 100; first separator 10; first base film 11; first bonding layer 12; first ceramic coating 13; second separator 20; second base film 21; second bonding layer 22; second ceramic coating 23; negative electrode plate 30; negative electrode current collector 31; negative electrode material layer 32; first negative electrode material layer 33; second negative electrode material layer 34; positive electrode plate 40; positive electrode current collector 41; and positive electrode material layer 42.

### DETAILED DESCRIPTION

The following clearly and completely describes the technical solutions in some embodiments of this application with reference to the accompanying drawings in some embodiments of this application. Apparently, these embodiments described are only some rather than all embodiments of this application. All other embodiments obtained by persons skilled in the art based on this application shall fall within the protection scope of this application.

It should be noted that, in specific implementations of this application, the lithium-ion battery is used as an example of the secondary battery to illustrate this application. However, the secondary battery of this application is not limited to the lithium-ion battery.

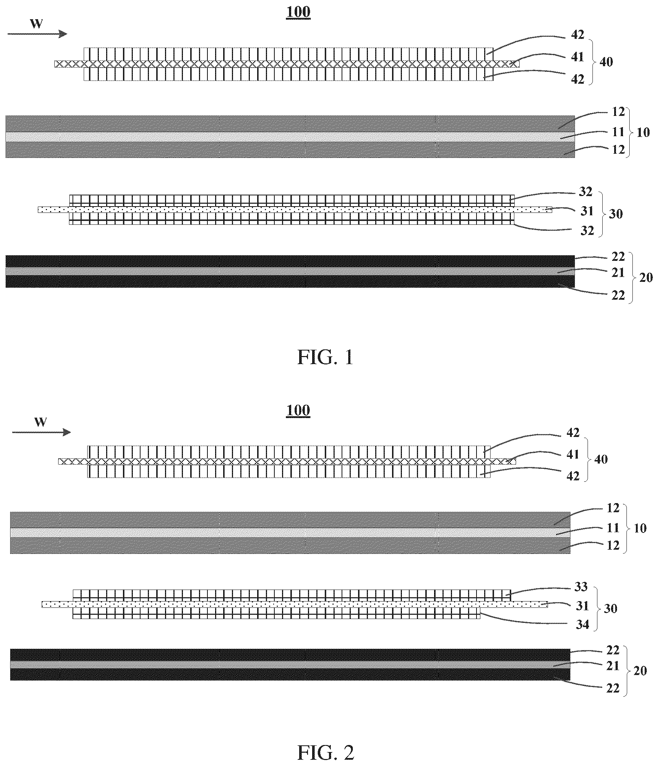

This application provides a secondary battery. The secondary battery includes an electrode assembly, where the electrode assembly is a wound structure. A winding direction of the electrode assembly is defined as direction W, and the electrode assembly includes a positive electrode plate, a negative electrode plate, a first separator, and a second separator. Those skilled in the art should understand that the winding direction of the positive electrode plate, the negative electrode plate, the first separator, and the second separator is the same as the winding direction of the electrode assembly. To facilitate understanding of the positional relationship between the positive electrode plate, the negative electrode plate, the first separator, and the second separator in the electrode assembly, FIG. 1 shows a partial schematic structural diagram of an electrode assembly unfolded along the winding direction W. As shown in FIG. 1, an electrode assembly 100 includes a first separator 10, a second separator 20, a negative electrode plate 30, and a positive electrode plate 40. The negative electrode plate 30 is located between the first separator 10 and the second separator 20. The first separator 10 is located between the positive electrode plate 40 and the negative electrode plate 30. The first separator 10 includes a first base film 11 and a first bonding layer 12. The first bonding layer 12 is disposed on two sides of the first base film 11. The second separator 20 includes a second base film 21 and a second bonding layer 22. The second bonding layer 22 is disposed on two sides of the second base film 21. The negative electrode plate 30 includes a negative electrode current collector 31 and negative electrode material layers 32 disposed on two surfaces of the negative electrode current collector 31. The positive electrode plate 40 includes a positive electrode current collector 41 and positive electrode material layers 42 disposed on both surfaces of the positive electrode current collector 41.

The first bonding layer includes a first binder, and the second bonding layer includes a second binder. The first base film is a non-woven fabric film, and a material of the first base film includes at least one of polyimide, polyamide, polysulfone, polyacrylonitrile, polyester, cellulose, polyether ether ketone, polyphenylene sulfide, polyacrylate, polyethylene terephthalate (PET), polyphthalamide, polyarylether sulfone, aramid, or polysulfonamide. The first binder includes at least one of polyvinylidene fluoride or polyvinylidene fluoride-hexafluoropropylene copolymer. The second base film is a microporous film, a material of the second base film includes polyolefin, and a polymer monomer of the polyolefin includes at least one of ethylene, propylene, 1-butene, 1-pentene, 1-hexene, 1-octene, 4-methyl-1-pentene, cyclobutene, cyclopentene, or cyclohexene. The second binder includes at least one of polyimide, polyvinyl alcohol, or sodium carboxymethyl cellulose.

Currently, base films commonly used in separators include microporous films or non-woven fabric films. The material of the microporous film includes polyolefin, such as polypropylene (PP) microporous film or polyethylene (PE) microporous film. The non-woven fabric film has relatively uniform pore size distribution, a large porosity, good thermal stability and dimensional stability. When applied to secondary batteries, the non-woven fabric film has the advantages of high mechanical strength and strong liquid absorption and retention capabilities, enabling the secondary batteries to have good charge-discharge performance and safety performance. However, the non-woven fabric film is thicker compared to the polyolefin microporous film, resulting in thickness loss, thereby reducing the energy density of the secondary battery. The binder of the bonding layer in the separator includes polyvinylidene fluoride (PVDF), polyvinylidene fluoride-hexafluoropropylene copolymer (PVDF-HFP), polyimide (PI), polyvinyl alcohol (PVA), or sodium carboxymethyl cellulose (CMC-Na). PVDF and PVDF-HFP have low crystallinity and glass transition temperature, good compatibility with the electrolyte, and good adhesion to electrode plates, but have low melting points ranging from 115°C to 170°C. The foregoing binders will melt when the external temperature approaches the melting point of the binders, leading to ineffective adhesion to the positive electrode plates or negative electrode plates and inability to further prevent the shrinkage of the separator base film. PI, PVA, and CMC-Na have higher melting points, with melting points greater than 200°C, and can effectively adhere to the positive electrode plate or negative electrode plate at higher temperatures and improve the thermal stability of the separator at high temperatures, but the foregoing binders cannot produce effective swelling in the electrolyte and cannot effectively improve adhesion and ionic conductivity, reducing the electrochemical performance of secondary batteries. In this application, high temperature refers to a temperature greater than or equal to 180°C.

In this application, the first separator is formed by the non-woven fabric film with high mechanical strength, high glass transition temperature, and high porosity combined with the first bonding layer with high ionic conductivity and low melting point. The combination of the non-woven fabric film capable of storing a large amount of electrolyte with the first bonding layer of high ionic conductivity can improve the cycling performance of the secondary battery. In addition, the non-woven fabric film shrinks little at high temperatures due to its high mechanical strength and high glass transition temperature and can make for the problem that the first bonding layer with a low melting point cannot prevent the base film of the separator from shrinking at high temperatures, thereby improving the high-temperature hot-box performance of the secondary battery. The second separator formed by a microporous film with a low glass transition temperature, thin thickness, and high chemical stability combined with a second bonding layer with a high melting point can make up for the problem of energy density loss caused by a larger thickness of the first separator. In addition, the second bonding layer still having good adhesion at high temperatures can reduce the possibility of the microporous film with a lower melting point shrinking at high temperatures, ensuring good high-temperature hot-box performance of the secondary battery. Since the first separator is thicker and the non-woven fabric film has higher strength, the placement of the first separator between the positive electrode plate and the negative electrode plate can better reduce the possibility of short circuit caused by the shrinkage of the separator at high temperatures and reduce the possibility of short circuit caused by larger positive electrode active substance particles on the positive electrode plate piercing the separator. With the use of the first and second separators of different types in combination in the secondary battery of this application, the adhesion between the separator and the positive electrode plate and between the separator and the negative electrode plate can be improved, the cycling performance and high-temperature hot-box performance of the secondary battery can be enhanced, and the secondary battery has a high energy density.

In an embodiment of this application, a material of the first base film includes polyethylene terephthalate, and the first binder includes polyvinylidene fluoride-hexafluoropropylene copolymer. The material of the second base film includes polyolefin, the polymer monomer of the polyolefin includes at least one of ethylene or propylene, and the second binder includes polyimide. With the use of the material of the first base film, the first binder, the material of the second base film, and the second binder, the first separator is formed by a non-woven fabric film with high mechanical strength, high glass transition temperature, and high porosity combined with the first bonding layer with high ionic conductivity and low melting point. The combination of the non-woven fabric film capable of storing a large amount of electrolyte with the first bonding layer of high ionic conductivity can further improve the cycling performance of the secondary battery. In addition, the non-woven fabric film shrinks little at high temperatures due to its high mechanical strength and high glass transition temperature and can make for the problem that the first bonding layer with a low melting point cannot prevent the base film of the separator from shrinking at high temperatures, thereby further improving the high-temperature hot-box performance of the secondary battery. The second separator formed by a microporous film with a low glass transition temperature, thin thickness, and high chemical stability combined with a second bonding layer with a high melting point can make up for the problem of energy density loss caused by a larger thickness of the first separator. In addition, the second bonding layer still having good adhesion at high temperatures can reduce the possibility of the microporous film with a lower melting point shrinking at high temperatures, further improving high-temperature hot-box performance of the secondary battery.

In an embodiment of this application, as shown in FIG. 2, the negative electrode plate 30 includes a negative electrode current collector 31 and a first negative electrode material layer 33 and a second negative electrode material layer 34 located on two sides of the negative electrode current collector 31, where along a winding direction of the electrode assembly, that is, direction W, one end of the first negative electrode material layer 33 is flush with one end of the second negative electrode material layer 34, a length of another end of the first negative electrode material layer 33 is greater than a length of another end of the second negative electrode material layer 34, the first separator 10 is located on one side having the first negative electrode material layer 33 of the negative electrode plate 30, and the second separator 20 is located on one side having the second negative electrode material layer 34 of the negative electrode plate 30. In the foregoing arrangement, the first base film has a larger porosity and the first binder has greater swelling. This is conducive to the first separator to store more electrolyte. The first separator located on the side having the first negative electrode material layer of the negative electrode plate is conducive to the adsorption of more electrolyte at side A of the negative electrode plate of the secondary battery, reducing the risk of lithium precipitation at the interface between the electrolyte and the negative electrode plate due to electrolyte bridge cutoff at a later stage of cycling of the secondary battery. In addition, the provision of the foregoing structure in the secondary battery while taking energy density into account is conducive to improving the high-temperature hot-box performance and cycling performance of the secondary battery. In this application, the side A of the negative electrode plate refers to a side of the negative electrode plate including the first negative electrode material layer, that is, the side of the negative electrode plate with the longer negative electrode material layer.

In an embodiment of this application, the negative electrode plate includes a negative electrode current collector and a first negative electrode material layer and a second negative electrode material layer located on two sides of the negative electrode current collector, where along a winding direction of the electrode assembly, that is, direction W, lengths of two ends of the first negative electrode material layer are greater than lengths of two ends of the second negative electrode material layer, the first separator is located on one side having the first negative electrode material layer of the negative electrode plate, and the second separator is located on one side having the second negative electrode material layer of the negative electrode plate. In the foregoing arrangement, the first base film has a larger porosity and the first binder has greater swelling. This is conducive to the first separator to store more electrolyte. The first separator located on the side having the first negative electrode material layer of the negative electrode plate is conducive to the adsorption of more electrolyte at side A of the negative electrode plate of the secondary battery, reducing the risk of lithium precipitation at the interface between the electrolyte and the negative electrode plate due to electrolyte bridge cutoff at a later stage of cycling of the secondary battery. In addition, the provision of the foregoing structure in the secondary battery while taking energy density into account is conducive to improving the high-temperature hot-box performance and cycling performance of the secondary battery.

In an embodiment of this application, average particle size D1 of the first binder is 4 µm to 15 µm. For example, average particle size D1 of the first binder may be 4 µm, 5 µm, 6 µm, 7 µm, 8 µm, 9 µm, 10 µm, 11 µm, 12 µm, 13 µm, 14 µm, or 15 µm, or a range defined by any two of the foregoing values. Average particle size D2 of the second binder is 10 µm to 20 µm. For example, the average particle size D2 of the second binder may be 10 µm, 11 µm, 12 µm, 13 µm, 14 µm, 15 µm, 16 µm, 17 µm, 18 µm, 19 µm, or 20 µm, or a range defined by any two of the foregoing values. With the average particle size D1 of the first binder and the average particle size D2 of the second binder being controlled within the ranges in this application, the first binder and the second binder have suitable average particle sizes, enabling the first bonding layer slurry in the preparation process of the first bonding layer to have suitable viscosity and the second bonding layer slurry in the preparation process of the second bonding layer to have suitable viscosity. Therefore, the first bonding layer and the second bonding layer have high adhesion; the adhesion between the separator and the positive electrode plate and between the separator and the negative electrode plate can be further improved, and this is conducive to the transport of lithium ions. In this way, the cycling performance of the secondary battery is further improved, and the secondary battery has good high-temperature hot-box performance.

In an embodiment of this application, coating weight CW1 of the first bonding layer is 0.0004 mg/mm² to 0.002 mg/mm². For example, the coating weight CW1 of the first bonding layer may be 0.0004 mg/mm², 0.0006 mg/mm², 0.0008 mg/mm², 0.001 mg/mm², 0.0012 mg/mm², 0.0014 mg/mm², 0.0016 mg/mm², 0.0018 mg/mm², or 0.002 mg/mm², or a range defined by any two of the foregoing values. Coating weight CW2 of the second bonding layer is 0.0004 mg/mm² to 0.002 mg/mm². For example, the coating weight CW2 of the second bonding layer may be 0.0004 mg/mm², 0.0006 mg/mm², 0.0008 mg/mm², 0.001 mg/mm², 0.0012 mg/mm², 0.0014 mg/mm², 0.0016 mg/mm², 0.0018 mg/mm², or 0.002 mg/mm², or a range defined by any two of the foregoing values. With the coating weight CW1 of the first bonding layer and the coating weight CW2 of the second bonding layer being controlled within the ranges in this application, the adhesion between the first separator and the positive electrode plate and/or the negative electrode plate and between the second separator and the positive electrode plate and/or the negative electrode plate is high, and the interface between the first separator and the positive electrode plate and/or the negative electrode plate and between the second separator and the positive electrode plate and/or the negative electrode plate can be strengthened, and this is conducive to the transport of lithium ions, thereby further improving the cycling performance of the secondary battery.

In an embodiment of this application, thickness H1 of the first base film is 10 µm to 15 µm. For example, the thickness H1 of the first base film may be 10 µm, 11 µm, 12 µm, 13 µm, 14 µm, or 15 µm, or a range defined by any two of the foregoing values. Thickness H2 of the second base film is 3 µm to 9 µm. For example, the thickness H2 of the second base film may be 3 µm, 5 µm, 6 µm, 7 µm, 8 µm, or 9 µm, or a range defined by any two of the foregoing values. The thickness H1 of the first base film and the thickness H2 of the second base film being controlled within the ranges in this application are conducive to reducing the risk of short circuit in the secondary battery caused by lithium dendrites piercing the second base film during the cycling of the secondary battery. The first base film and the second base film have good mechanical strength and thermal stability and are not prone to shrinkage at high temperatures, so that the high-temperature hot-box performance of the secondary battery can be further improved. Moreover, the transmission distance of lithium ions during the cycling of the secondary battery is moderate, further improving the cycling performance of the secondary battery. In addition, a total thickness of the first base film and the second base film is small, enabling the secondary battery to have a high energy density.

In an embodiment of this application, porosity P1 of the first base film is 40% to 70%. For example, the porosity P1 of the first base film may be 40%, 42%, 44%, 46%, 48%, 50%, 52%, 54%, 56%, 58%, 60%, 62%, 64%, 66%, 68%, or 70%, or a range defined by any two of the foregoing values. Porosity P2 of the second base film is 5% to 50%. For example, the porosity P2 of the second base film may be 5%, 7%, 9%, 10%, 13%, 15%, 17%, 20%, 23%, 25%, 27%, 30%, 33%, 35%, 37%, 40%, 43%, 45%, 47%, or 50%, or a range defined by any two of the foregoing values. With the porosity P1 of the first base film and the porosity P2 of the second base film being controlled within the ranges in this application, the first separator and the second separator have high mechanical strength and good thermal stability, and the high-temperature hot-box performance of the secondary battery can be further improved. In addition, the first and second separators have strong liquid absorption and retention capabilities, and this is conducive to the transport of lithium ions, thereby further improving the cycling performance of the secondary battery.

In an embodiment of this application, the first separator further includes a first ceramic coating located between the first base film and the first bonding layer, and/or the second separator further includes a second ceramic coating located between the second base film and the second bonding layer, the first ceramic coating includes first ceramic particles, the second ceramic coating includes second ceramic particles, and the first ceramic particles and the second ceramic particles are each independently selected from at least one of aluminum oxide, boehmite, silicon oxide, magnesium oxide, titanium oxide, tin oxide, calcium oxide, zirconium oxide, yttrium oxide, silicon carbide, aluminum hydroxide, magnesium hydroxide, or calcium hydroxide.

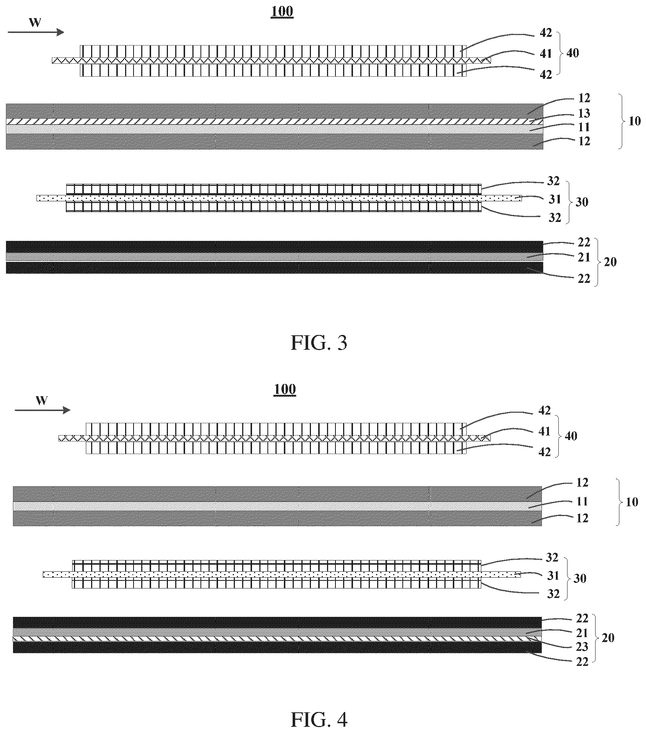

In an embodiment of this application, as shown in FIG. 3, the first separator 10 further includes a first ceramic coating 13 located between the first base film 11 and the first bonding layer 12. The first ceramic coating 13 includes first ceramic particles, and the first ceramic particles are selected from at least one of aluminum oxide, boehmite, silicon oxide, magnesium oxide, titanium oxide, tin oxide, calcium oxide, zirconium oxide, yttrium oxide, silicon carbide, aluminum hydroxide, magnesium hydroxide, or calcium hydroxide. The first separator further includes a first ceramic coating, and the type of the first ceramic particles in the first ceramic coating is within the range in this application, so that the thermal stability and mechanical strength of the first separator can be further improved, effectively reducing the shrinkage of the first separator at high temperatures, thereby further improving the high-temperature hot-box performance of the secondary battery.

In an embodiment of this application, as shown in FIG. 4, the second separator 20 further includes a second ceramic coating 23 located between the second base film 21 and the second bonding layer 22. The second ceramic coating 23 includes second ceramic particles, and the second ceramic particles are selected from at least one of aluminum oxide, boehmite, silicon oxide, magnesium oxide, titanium oxide, tin oxide, calcium oxide, zirconium oxide, yttrium oxide, silicon carbide, aluminum hydroxide, magnesium hydroxide, or calcium hydroxide. The second separator further includes a second ceramic coating, and the type of the second ceramic particles in the second ceramic coating is within the range in this application, so that the thermal stability and mechanical strength of the second separator can be further improved, effectively reducing the shrinkage of the second separator at high temperatures, thereby further improving the high-temperature hot-box performance of the secondary battery.

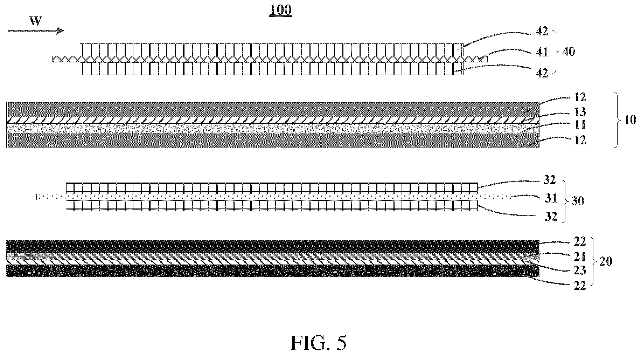

In an embodiment of this application, as shown in FIG. 5, the first separator 10 further includes a first ceramic coating 13 located between the first base film 11 and the first bonding layer 12, the second separator 20 further includes a second ceramic coating 23 located between the second base film 21 and the second bonding layer 22, the first ceramic coating 13 includes first ceramic particles, the second ceramic coating 23 includes second ceramic particles, and the first ceramic particles and the second ceramic particles are each independently selected from at least one of aluminum oxide, boehmite, silicon oxide, magnesium oxide, titanium oxide, tin oxide, calcium oxide, zirconium oxide, yttrium oxide, silicon carbide, aluminum hydroxide, magnesium hydroxide, or calcium hydroxide. The first separator further includes a first ceramic coating, the second separator further includes a second ceramic coating, and the type of the first ceramic particles in the first ceramic coating and the type of the second ceramic particles in the second ceramic coating are within the range in this application, so that the thermal stability and mechanical strength of the first separator and the second separator can be further improved, effectively reducing the shrinkage of the first separator and the second separator at high temperatures, thereby further improving the high-temperature hot-box performance of the secondary battery.

In an embodiment of this application, the first ceramic coating further includes a third binder, and the second ceramic coating further includes a fourth binder. The types of the third binder and the fourth binder are not particularly limited in this application, provided that the objectives of this application can be achieved. For example, the third binder and the fourth binder are each independently selected from at least one of styrene-butadiene rubber, polyvinyl alcohol, polyvinylidene fluoride, polyacrylic acid, polymethyl methacrylate, polybutyl acrylate, or polyacrylonitrile. The first ceramic particles and the percentage of the third binder in the first ceramic coating, and the second ceramic particles and the percentage of the fourth binder in the second ceramic coating are not particularly limited in this application. Those skilled in the art can choose according to actual needs, provided that the objectives of this application can be achieved. The coating weights of the first ceramic coating and the second ceramic coating are not particularly limited in this application. Those skilled in the art can choose according to actual needs, provided that the objectives of this application can be achieved.

The weight-average molecular weight of the material of the first base film is not particularly limited in this application, provided that the objectives of this application can be achieved. For example, the weight-average molecular weight of the material of the first base film may be 2 × 10⁵ to 1.5 × 10⁶. The weight-average molecular weight of the material of the second base film is not particularly limited in this application, provided that the objectives of this application can be achieved. For example, the weight-average molecular weight of the material of the second base film may be 2 × 10⁵ to 1.5 × 10⁶. A preparation method of microporous film is not particularly limited in this application, provided that the objectives of this application can be achieved. For example, the microporous film may be prepared from the materials within the range in this application by using a wet process or a dry process using unidirectional or bidirectional stretching, or by using a thermally induced phase separation method. A preparation method of non-woven fabric film is not particularly limited in this application, provided that the objectives of this application can be achieved. For example, the non-woven fabric film may be prepared from the materials within the range in this application by using at least one of a melt-blown method, spunbond method, wet papermaking method, hydroentangling method, needle-punching method, or hot-rolling method. In this application, it can be understood that the material of the first base film is the material of the non-woven fabric film, and the material of the second base film is the material of the microporous film. It is also possible to select commercially available non-woven fabric films and microporous films with different materials and select the first base film and second base film of the required materials. This is not particularly limited in this application, provided that the objectives of this application can be achieved.

The weight-average molecular weight (Mw) of the first binder is not particularly limited in this application, provided that the objectives of this application can be achieved. For example, the weight-average molecular weight of the first binder may be 6 × 10⁵ to 9 × 10⁶. The weight-average molecular weight of the second binder is not particularly limited in this application, provided that the objectives of this application can be achieved. For example, the weight-average molecular weight of the second binder may be 5 × 10⁵ to 7 × 10⁶.

In an embodiment of this application, the first bonding layer may further include a first thickener, and the second bonding layer may further include a second thickener. The application of the first thickener to the first bonding layer and the second thickener to the second bonding layer is conducive to enhancing the stability of the first bonding layer slurry and the second bonding layer slurry, preventing the settling of components in the first bonding layer slurry and the second bonding layer slurry. The types of the first thickener and the second thickener are not particularly limited in this application, provided that the objectives of this application can be achieved. For example, the first thickener and the second thickener are each independently selected from at least one of hydroxyethyl cellulose, methyl hydroxyethyl cellulose, sodium carboxymethyl cellulose, polyacrylamide, or sodium alginate. The percentage of the first thickener in the first bonding layer and the percentage of the second thickener in the second bonding layer are not particularly limited in this application. Those skilled in the art can choose according to actual needs, provided that the objectives of this application can be achieved. For example, based on a mass of the first bonding layer, a mass percentage of the first thickener is 0.3% to 6%; and based on a mass of the second bonding layer, a mass percentage of the second thickener is 0.3% to 6%. The percentage of the first binder in the first bonding layer and the percentage of the second binder in the second bonding layer are not particularly limited in this application. Those skilled in the art can choose according to actual needs, provided that the objectives of this application can be achieved. For example, based on the mass of the first bonding layer, a mass percentage of the first binder is 94% to 99.7%; and based on the mass of the second bonding layer, a mass percentage of the second binder is 94% to 99.7%.

A preparation method of first separator is not particularly limited in this application, provided that the objectives of this application can be achieved. For example, the preparation method of first separator includes but is not limited to the following steps: (1) mixing a first binder and a first thickener well to obtain a first bonding layer slurry; (2) applying the first bonding layer slurry to one surface of a first base film, followed by drying to obtain a first separator with the first bonding layer applied on one side; and (3) repeating the foregoing steps on another surface of the first base film to prepare the first separator.

In another embodiment of this application, the preparation method of first separator may include but is not limited to the following steps: (1) mixing a first binder and a first thickener well to obtain a first bonding layer slurry; (2) mixing first ceramic particles and a third binder well to obtain a first ceramic coating slurry; and (3) applying the first bonding layer slurry to one surface of a first base film, followed by drying to form the first bonding layer on one surface of the first base film; firstly applying the first ceramic coating slurry to another surface of the first base film, followed by drying to form a first ceramic coating on the another surface of the first base film; and then applying the first bonding layer slurry to a surface of the first ceramic coating away from the first base film, followed by drying to form another first bonding layer on the surface of the first ceramic coating away from the first base film, thereby preparing the first separator.

A preparation method of second separator is not particularly limited in this application, provided that the objectives of this application can be achieved. For example, the preparation method of second separator includes but is not limited to the following steps: (1) mixing a second binder and a second thickener well to obtain a second bonding layer slurry; (2) applying the second bonding layer slurry to one surface of a second base film, followed by drying to obtain a second separator with the second bonding layer applied on one side; and (3) repeating the foregoing steps on another surface of the second base film to prepare the second separator.

In another embodiment of this application, the preparation method of second separator may include but is not limited to the following steps: (1) mixing a second binder and a second thickener well to obtain a second bonding layer slurry; (2) mixing second ceramic particles and a fourth binder well to obtain a second ceramic coating slurry; (3) applying the second bonding layer slurry to one surface of a second base film, followed by drying to form the second bonding layer on one surface of the second base film; firstly applying the second ceramic coating slurry to another surface of the second base film, followed by drying to form a second ceramic coating on the another surface of the second base film; and then applying the second bonding layer slurry on a surface of the second ceramic coating away from the second base film, followed by drying to form another second bonding layer on the surface of the second ceramic coating away from the second base film, thereby preparing the second separator.

A manner of controlling the average particle size of the first binder and the average particle size of the second binder is not particularly limited in this application, provided that the objectives of this application can be achieved. For example, commercially available first binders and second binders with different average particle sizes can be selected, and the average particle size of the first binders and the average particle size of the second binders can be tested using the test method in the "average particle size test for first binder and second binder" described in this application, and a first binder with a required average particle size and a second binder with a required average particle size can be selected.

In this application, the coating weight of the first bonding layer and the coating weight of the second bonding layer can be controlled by any means known to those skilled in the art. For example, when the first bonding layer slurry is applied to the surface of the first base film, on the basis of a certain solid content of the first bonding layer slurry, the coating amount of the first bonding layer slurry can be increased to increase the coating weight of the first bonding layer; and when the second bonding layer slurry is applied to the surface of the second base film, on the basis of a certain solid content of the second bonding layer slurry, the coating amount of the second bonding layer slurry can be increased to increase the coating weight of the second bonding layer. This is not particularly limited in this application, provided that the objectives of this application can be achieved.

A manner of controlling the thickness of the first base film and the second base film is not particularly limited, provided that the objectives of this application can be achieved. For example, commercially available first base films and second base films with different thicknesses can be selected, and the thicknesses of the first base films and the second base films can be tested using the test method in the "thickness test for first base film and second base film" described in this application, and a first base film with a required thickness and a second base film with a required thickness can be selected.

A manner of controlling the porosity of the first base film and the porosity of the second base film is not particularly limited, provided that the objectives of this application can be achieved. For example, commercially available non-woven fabric films and microporous films with different porosities can be selected, and the porosities of the first base films and the second base films can be tested using the test method in the "porosity test for first base film and second base film" described in this application, and a first base film with a required porosity and a second base film with a required porosity can be selected.

The negative electrode current collector is not particularly limited in this application, provided that the objectives of this application can be achieved. For example, the negative electrode current collector may include copper foil, copper alloy foil, nickel foil, stainless steel foil, titanium foil, nickel foam, copper foam, a composite current collector (for example, a lithium-copper composite current collector, a carbon-copper composite current collector, a nickel-copper composite current collector, or a titanium-copper composite current collector), or the like.

The negative electrode material layer, the first negative electrode material layer, and the second negative electrode material layer of this application include a negative electrode active material. The negative electrode active material is not particularly limited, provided that the objectives of this application can be achieved. For example, the negative electrode active material may include at least one of natural graphite, artificial graphite, mesocarbon microbead (MCMB), hard carbon, soft carbon, silicon, a silicon-carbon composite, SiOₓ (0.5 < x < 1.6), a Li-Sn alloy, a Li-Sn-O alloy, Sn, SnO, SnO₂, spinel-structure lithium titanate Li₄Ti₅O₁₂, a Li-Al alloy, or a lithium metal. The negative electrode material layer, the first negative electrode material layer, and the second negative electrode material layer of this application further include a negative electrode binder. The negative electrode binder is not particularly limited, provided that the objectives of this application can be achieved. For example, the negative electrode binder may include at least one of polyacrylate, polyimide, polyamide, polyamideimide, polyfluoroethylene, polystyrene butadiene copolymers (styrene butadiene rubber), sodium alginate, polyvinyl alcohol, polytetrafluoroethylene, polyacrylonitrile, carboxymethyl cellulose, sodium carboxymethyl cellulose, potassium carboxymethyl cellulose, sodium hydroxymethyl cellulose, or potassium hydroxymethyl cellulose. The negative electrode material layer, the first negative electrode material layer, and the second negative electrode material layer of this application may further include a negative electrode conductive agent. The negative electrode conductive agent is not particularly limited in this application, provided that the objectives of this application can be achieved. For example, the negative electrode conductive agent may include but is not limited to at least one of conductive carbon black, carbon nanotubes (CNTs), carbon fibers, flake graphite, graphene, metal materials, or conductive polymers. The foregoing conductive carbon black may include but is not limited to acetylene black and/or Ketjen black. The foregoing carbon nanotubes may include but are not limited to single-walled carbon nanotubes and/or multi-walled carbon nanotubes. The carbon fiber may include but is not limited to vapor grown carbon fiber (VGCF) and/or carbon nanofiber. The metal material may include but is not limited to metal powder and/or metal fiber, and specifically, the metal may include but is not limited to at least one of copper, nickel, aluminum, or silver. The foregoing conductive polymers may include but are not limited to at least one of polyphenylene derivative, polyaniline, polythiophene, polyacetylene, or polypyrrole. Mass ratios of the negative electrode active material, the negative electrode conductive agent, and the negative electrode binder in the negative electrode material layer, the first negative electrode material layer, and the second negative electrode material layer are not particularly limited in this application. Those skilled in the art can choose according to actual needs, provided that the objectives of this application can be achieved.

The thickness of the negative electrode current collector is not particularly limited in this application, provided that the objectives of this application can be achieved. For example, the thickness of the negative electrode current collector is 4 µm to 15 µm. Thicknesses of the negative electrode material layer, the first negative electrode material layer, and the second negative electrode material layer are not particularly limited in this application, provided that the objectives of this application can be achieved. For example, the thickness of a single-sided negative electrode material layer is 30 µm to 130 µm, the thickness of a single-sided first negative electrode material layer is 30 µm to 130 µm, and the thickness of a single-sided second negative electrode material layer is 30 µm to 130 µm.

Optionally, the negative electrode plate may further include a conductive layer, and the conductive layer is sandwiched between the negative electrode current collector and the negative electrode material layer. The composition of the conductive layer is not particularly limited in this application, and the conductive layer may be a conductive layer commonly used in the art. The conductive layer includes a conductive agent and a binder. The conductive agent and the binder in the conductive layer are not particularly limited in this application and may be at least one of the foregoing negative electrode conductive agents and the foregoing negative electrode binders. The mass ratio of the conductive agent and the binder in the conductive layer is not particularly limited in this application. Those skilled in the art can choose according to actual needs, provided that the objectives of this application can be achieved.

In this application, the positive electrode plate includes a positive electrode current collector and a positive electrode material layer disposed on at least one surface of the positive electrode current collector. The "positive electrode material layer disposed on at least one surface of the positive electrode current collector" means that the positive electrode material layer may be disposed on one or two surfaces of the positive electrode current collector in its thickness direction. It should be noted that the "surface" herein may be an entire region or a partial region of the positive electrode current collector. This is not particularly limited in this application, provided that the objectives of this application can be achieved. For example, as shown in FIG. 1 to FIG. 5, the positive electrode plate 40 includes a positive electrode current collector 41 and a positive electrode material layer 42 disposed on two surfaces of the positive electrode current collector 41. The positive electrode current collector is not particularly limited in this application, provided that the objectives of this application can be achieved. For example, the positive electrode current collector may include aluminum foil, aluminum alloy foil, a composite current collector (for example, an aluminum-carbon composite current collector), or the like.

The positive electrode material layer of this application includes a positive electrode active material. The positive electrode active material includes a substance capable of reversibly intercalating and deintercalating active ions such as lithium ions. The positive electrode material layer may be one or more layers, and each of a plurality of the positive electrode active material layers may contain the same or different positive electrode active materials. The positive electrode active material is not particularly limited in this application, provided that the objectives of this application can be achieved. For example, the positive electrode active material may include but is not limited to at least one of lithium nickel cobalt manganate (such as NCM811, NCM622, NCM523, NCM111), lithium nickel cobalt aluminate, lithium iron phosphate, lithium-rich manganese-based material, lithium cobaltate (LiCoO₂), lithium manganate, lithium iron manganese phosphate, or lithium titanate. The positive electrode material layer of this application further includes a positive electrode conductive agent and a positive electrode binder. The positive electrode conductive agent and positive electrode binder in the positive electrode material layer are not particularly limited in this application, provided that the objectives of this application can be achieved. For example, the positive electrode conductive agent may include at least one of the foregoing negative electrode conductive agents; and the positive electrode binder may include at least one of the foregoing negative electrode binders. The mass ratio of the positive electrode active material, the positive electrode conductive agent, and the positive electrode binder in the positive electrode active material layer is not particularly limited in this application. Those skilled in the art can choose according to actual needs, provided that the objective of this application can be achieved.

The thickness of the positive electrode current collector is not particularly limited in this application, provided that the objectives of this application can be achieved. For example, the thickness of the positive electrode current collector is 9 µm to 15 µm. The thickness of the positive electrode material layer is not particularly limited this application, provided that the objectives of this application can be achieved. For example, the thickness of a single-sided positive electrode material layer may be 30 µm to 120 µm.

Optionally, the positive electrode plate may further include a conductive layer, and the conductive layer is located between the positive electrode current collector and the positive electrode material layer. The composition of the conductive layer is not particularly limited in this application, and the conductive layer may be a conductive layer commonly used in the art. The conductive layer includes a conductive agent and a binder. The conductive agent and the binder in the conductive layer are not particularly limited in this application and may at least one of the foregoing positive electrode conductive agents and the foregoing positive electrode binders. The mass ratio of the conductive agent and the binder in the conductive layer is not particularly limited in this application. Those skilled in the art can choose according to actual needs, provided that the objectives of this application can be achieved.

In this application, the secondary battery further includes an electrolyte. The electrolyte includes a lithium salt. The type of the lithium salt is not particularly limited in this application and may be any known lithium salt in the art. For example, the lithium salt may include but is not limited to at least one of lithium hexafluorophosphate (LiPF₆), lithium bis(trifluoromethanesulfonyl)imide (LiN(CF₃SO₂)₂, LiTFSI), lithium bis(fluorosulfonyl)imide (Li(N(SO₂F)₂), LiFSI), lithium difluorophosphate (LiPO₂F₂), lithium bis(oxalato)borate (LiB(C₂O₄)₂, LiBOB), or lithium difluoro(oxalato)borate (LiBF₂(C₂O₄), LiDFOB). The mass percentage of the lithium salt in the electrolyte is not particularly limited in this application, provided that the objectives of this application can be achieved. The electrolyte includes a non-aqueous organic solvent. The non-aqueous organic solvent is not particularly limited in this application, provided that the objective of this application can be achieved. For example, the non-aqueous organic solvent may include at least one of a carbonate compound, a carboxylate compound, an ether compound, or another organic solvent. The foregoing carbonate compound may include but is not limited to at least one of a linear carbonate compound, a cyclic carbonate compound, or a fluorocarbonate compound. The foregoing linear carbonate compound may include but is not limited to at least one of dimethyl carbonate (DMC), diethyl carbonate (DEC), dipropyl carbonate (DPC), methyl propyl carbonate (MPC), ethylene propyl carbonate (EPC), or ethyl methyl carbonate (EMC). The foregoing cyclic carbonate may include but is not limited to at least one of ethylene carbonate (EC), propylene carbonate (PC), butylene carbonate (BC), or vinylene carbonate (VEC). The foregoing fluorocarbonate compound may include but is not limited to at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The foregoing carboxylate compound may include but is not limited to at least one of methyl formate, methyl acetate, ethyl acetate, n-propyl acetate, tert-butyl acetate, methyl propionate, ethyl propionate, or propyl propionate. The ether compound may include but is not limited to at least one of dibutyl ether, tetraethylene glycol dimethyl ether, diglyme, 1,2-dimethoxyethane, 1,2-diethoxyethane, ethoxymethoxy ethane, 2-methyltetrahydrofuran, or tetrahydrofuran. The another organic solvent may include but is not limited to at least one of dimethyl sulfoxide, 1,2-dioxolane, sulfolane, methyl-sulfolane, 1,3-dimethyl-2-imidazolidinone, N-methyl-2-pyrrolidone, methylamide, dimethylformamide, acetonitrile, trimethyl phosphate, triethyl phosphate, trioctyl phosphate, or phosphate ester. The mass percentage of the non-aqueous organic solvent in the electrolyte is not particularly limited in this application, provided that the objectives of this application can be achieved.

The secondary battery in this application further includes a packaging bag for accommodating the positive electrode plate, the negative electrode plate, the separator, the electrolyte, and other known components of the secondary battery in the art. The other components are not limited in this application. The packaging bag is not particularly limited in this application and may be any well-known packaging bag in the art, provided that the objectives of this application can be achieved. For example, an aluminum-plastic film packaging bag may be used.

The secondary battery in this application is not particularly limited, and may include any apparatus in which electrochemical reactions take place. In an embodiment of this application, the secondary battery may include but is not limited to a lithium-ion secondary battery (a lithium-ion battery), a lithium polymer secondary battery, or a lithium-ion polymer secondary battery.

A preparation method of secondary battery is not particularly limited in this application, and a well-known preparation method in the art can be used, provided that the objectives of this application can be achieved. For example, the preparation method of secondary battery includes but is not limited to the following steps: stacking a positive electrode plate, a first separator, a negative electrode plate, and a second separator in sequence, followed by operations such as winding and folding as needed to obtain an electrode assembly with a wound structure, placing the electrode assembly into a packaging bag, injecting an electrolyte into the packaging bag, and sealing the packaging bag to obtain a secondary battery.

A second aspect of this application provides an electronic apparatus including the secondary battery according to any one of the foregoing embodiments. The secondary battery of this application has good cycling performance, good high-temperature hot-box performance, and a high energy density, so the electronic apparatus of this application has good use performance.

The electronic apparatus of this application is not particularly limited, and the electronic apparatus may be any known electronic apparatus used in the prior art. For example, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a hand-held cleaner, a portable CD player, a mini-disc, a transceiver, an electronic notepad, a calculator, a storage card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, and a lithium-ion capacitor.

### Examples

In the following, examples and comparative examples are given to describe some embodiments of this application in more detail. Various tests and evaluations are performed in the following methods. In addition, unless otherwise specified, "part" and "%" are based on weight.

### Test methods and devices

### Method for sampling first separator and second separator

Lithium-ion batteries in examples and comparative examples under test were disassembled; first separators and second separators were taken out and soaked in dimethyl carbonate (DMC) for 20 minutes to remove residual electrolyte; and then the first separators and the second separators were placed into an oven for drying at 60°C for 12 hours to obtain first separator samples and second separator samples. First separators and second separators used in following average particle size tests for the first binder and the second binder and thickness tests for the first base film and the second base film were sampled using the foregoing method.

### Average particle size test for first binder and second binder

For the average particle size of the first binder and the average particle size of the second binder, surfaces of the first separator and the second separator perpendicular to the thickness direction can be observed using a scanning electron microscopy (SEM). Ten first binder particles in the first bonding layer were selected to obtain an average particle size D1 of the first binder, and ten second binder particles in the second bonding layer were selected to obtain the average particle size D2 of the second binder. It is worth noting that particles of the first binder and the second binder deform under the action of pressure during the cold pressing, hot pressing, and other processes in the preparation of the lithium-ion battery, resulting in different diameters of the particles in thickness direction of the separator and a direction perpendicular to the thickness direction of the separator. The average particle size of the first binder and the average particle size of the second binder in this application are diameters of particles measured on the surface perpendicular to the thickness direction of the separator. Therefore, the average particle size of the first binder and the average particle size of the second binder is not limited by the thickness of the first bonding layer and the thickness of the second bonding layer.

### Thickness test for first base film and second base film

A first separator was polished with argon ions to obtain a cross-section of the first separator. The morphology of the cross-section in thickness direction of the first separator was observed using a field emission scanning electron microscopy (Philips, XL-30), and scanning electron microscopy photos were taken. Thickness H1 of a first base film was measured using the scanning electron microscopy.

A second separator was polished with argon ions to obtain a cross-section of the second separator. The morphology of the cross-section in thickness direction of the second separator was observed using a field emission scanning electron microscopy (Philips, XL-30), and scanning electron microscopy photos were taken. Thickness H2 of a second base film was measured using the scanning electron microscopy.

### Porosity test for first base film and second base film

Lithium-ion batteries in examples and comparative examples under test were disassembled; first separators and second separators were taken out and soaked in dimethyl carbonate (DMC) for 20 minutes to remove residual electrolyte; and then the first separators and the second separators were placed into an oven for drying at 60°C for 12 hours to obtain first separator samples and second separator samples. First separator samples and second separator samples obtained after DMC cleaning and drying were placed into a container, an appropriate amount of N-methylpyrrolidone (NMP) was added, and the container was placed into an ultrasonic instrument with a heating function for ultrasonic treatment, with a temperature controlled at 45°C for ultrasonic treatment for 3 hours. The first separators and the second separators were taken out when they become completely transparent to obtain first base film samples and second base film samples.

A gas displacement method was used, the first base film samples and the second base film samples were die-cut with a mold to prepare test samples (those skilled in the art can select a mold with a common size and shape according to the size, shape, testing device requirements, and other factors of the test samples). The true volume V0 of the test samples was measured using a true density tester. The apparent volume V of the test samples can be calculated through an area and a thickness of the test samples. Percentage P of pore volume of test samples to total volume = (V - V0) / V × 100%, that is, a porosity of the first base film or the second base film.

### Thickness test for lithium-ion battery

The testing pressure was adjusted to a required pressure of 600 g by adding or removing weights. A 3 mm gauge block was placed on a sample stage, and upon activation of white buttons at two sides, the panel pressure gap battery thickness gauge (PPG battery thickness gauge) automatically advanced the gauge block to a measurement position and test the gauge block. Any 9 points were tested in sequence. A calibration tolerance of ±0.02 mm was applied. The lithium-ion battery was held with one hand, with the barcode facing upwards. The lithium-ion battery was placed on the sample stage for the barcode to be scanned first. Subsequently, upon activation of the white buttons at two sides, the gauge automatically advanced the battery into the measurement position and conducted the thickness test. A test result representing thickness THK of the lithium-ion battery was recorded. In this application, a smaller thickness of the lithium-ion battery represents a smaller volume of the lithium-ion battery and a higher energy density of the lithium-ion battery.

### Cycling performance test

At 25°C, the lithium-ion battery was charged at a constant current of 2C to 4.5 V, charged at a constant voltage of 4.5V until the current is 0.02C, left standing for 5 minutes, then discharged at a constant current of 0.7C to 3.0 V. This was the first cycle, and a discharge capacity was recorded. Charge-discharge cycles were performed for the lithium-ion battery according to the foregoing procedure. When the number of cycles reached 1000 (cls), the test stopped, and a capacity retention rate was calculated and used as an indicator to evaluate the cycling performance of the lithium-ion battery.

Capacity retention rate = (discharge capacity after 1000 cycles/discharge capacity at the first cycle) × 100%.

### High-temperature hot-box test

At 25°C, lithium-ion batteries were charged to 4.5 V with a constant current of 2C and charged to 4.5 V with a constant voltage until the current is 0.02C, placed into a test chamber with circulating air convection at a temperature of 25°C and a humidity of 80%, and left standing for 5 minutes. Then the test chamber was heated to 130°C at a rate of 5°C/min and maintained 130°C for 10 minutes, and then the test stopped to check whether a lithium-ion battery catches fire or explodes. A battery passed the test if no fire and no explosion occur. Pass rate of hot-box test at 130°C = number of batteries passing hot-box test at 130°C / total number of batteries in hot-box test at 130°C (10).

At 25°C, lithium-ion batteries were charged to 4.5 V with a constant current of 2C and charged to 4.5 V with a constant voltage until the current is 0.02C, placed into a test chamber with circulating air convection at a temperature of 25°C and a humidity of 80%, and left standing for 5 minutes. Then the test chamber was heated to 132°C at a rate of 5°C/min and maintained 132°C for 10 minutes, and then the test stopped to check whether a lithium-ion battery catches fire or explodes. A battery passed the test if no fire and no explosion occur. Pass rate of hot-box test at 132°C = number of batteries passing hot-box test at 132°C / total number of batteries in hot-box test at 132°C (10).

### Test for adhesion of separator to electrode plate

A 180° peel test standard was used to measure the dry pressure adhesion between the separator and the electrode plate. Lithium-ion batteries in examples and comparative examples under test were disassembled, and positive electrode plates, negative electrode plates, first separators, and second separators were peeled off.

The electrode plate and the separator under test were soaked in dimethyl carbonate for 20 minutes to remove the electrolyte, then the separator under test was compounded with the electrode plate, and hot pressing was performed using a hot-pressing machine at 85°C and 1 Mpa for 85 seconds. The compounded sample was cut into strips of 15 mm × 54.2 mm to obtain test strips for the adhesion test for the adhesion of the separator under test to the electrode plate under test. A 15 mm × 55 mm double-sided tape (NITTO.NO5000NS) was stuck on a steel plate, then a test strip was stuck on the double-sided tape with the test surface facing down. A 15 mm × 70 mm paper strip was connected to one end of the test strip through the double-sided tape, and a small rod with a mass of 2 kg was pushed by hand to roll over the test strip for 8 times to obtain a test sample. A tensile machine was used to perform the test. The test sample was fixed on a test bench, then folded 180° upwards and fixed with a clamp. The tensile machine then pulled the paper strip at a speed of 50 mm/min until the separator under test and the electrode plate under test on the surface of the double-sided tape were separated. Then the test ended, and test data was saved. The adhesion F of the separator under test to the electrode plate under test was calculated based on the pulling force and the displacement by pulling when the separator under test and the electrode plate under test were separated, in N/m. The adhesion of the first separator to the positive electrode plate was denoted as F₁ in N/m; the adhesion of the first separator to the negative electrode plate was denoted as F₂ in N/m; and the adhesion of the second separator to the negative electrode plate was denoted as F₃ in N/m.

### Example 1-1

### <Preparation of first separator>

A non-woven fabric film with thickness H1 of 12 µm was used as a first base film, the non-woven fabric film was made of polyethylene terephthalate, and a porosity P1 of the first base film was 55% (Manufacturer: DuPont, Grade: FR543).

First binder polyvinylidene fluoride-hexafluoropropylene copolymer (PVDF-HFP, Mw = 8.5 × 10⁶) and first thickener sodium carboxymethyl cellulose (Mw = 8 × 10⁵) were mixed at a mass ratio of 98.5:1.5, added with deionized water as a solvent, and stirred well to form a first bonding layer slurry with a solid content of 75wt%.

The first bonding layer slurry was applied to one surface of a first base film and dried at 60°C to obtain a first separator with the first bonding layer applied on one side; then the foregoing steps were repeated on another surface of the first base film to obtain the first separator, where average particle size D1 of the first binder was 8 µm, and coating weight CW1 of the first bonding layer was 0.001 mg/mm².

### <Preparation of second separator>

A microporous film with a thickness H2 of 7 µm was used as a second base film, the microporous film was made of polypropylene and polyethylene, where a mass ratio of polypropylene to polyethylene was 1:1, and a porosity P2 of the second base film was 18% (Manufacturer: Celgard, Grade: 2325).

Second binder polyimide (PI, Mw = 6 × 10⁵) and second thickener sodium carboxymethyl cellulose (Mw = 8 × 10⁵) were mixed at a mass ratio of 98.5:1.5, added with deionized water as a solvent, and stirred well to form a second bonding layer slurry with a solid content of 75wt%.

The second bonding layer slurry was applied to one surface of a second base film and dried at 60°C to obtain a second separator with the second bonding layer applied on one side; then the foregoing steps were repeated on another surface of the second film to obtain the second separator. Average particle size D2 of the second binder was 15µm, and coating weight CW2 of the second bonding layer was 0.0005 mg/mm².

### <Preparation of negative electrode plate>

Negative electrode active material artificial graphite, styrene-butadiene rubber, and sodium carboxymethyl cellulose were mixed at a mass ratio of 97.6:1.1:1.3, then added with deionized water as a solvent, and stirred well to obtain a first negative electrode slurry with a solid content of 70wt%. The first negative electrode slurry is also used as a second negative electrode slurry. The first negative electrode slurry was applied on one surface of a negative electrode current collector copper foil with a thickness of 6 µm and dried at 90°C to obtain a negative electrode plate with a first negative electrode material layer of 50 µm coated in thickness. The second negative electrode slurry was applied on another surface of the negative electrode current collector copper foil and dried. The second negative electrode material layer coated on the surface was 50 µm in thickness, then obtaining a negative electrode plate with a total thickness of 106 µm. The coated negative electrode plate was cold-pressed and then cut to dimensions of 74 mm × 824 mm for later use. The first negative electrode material layer had a compacted density of 1.735 g/cm³ and a length of 720 mm, and the second negative electrode material layer had a compacted density of 1.735 g/cm³ and a length is 680 mm.

### <Preparation of positive electrode plate>

Positive electrode active material lithium cobalt oxide, conductive agent conductive carbon black, and positive electrode binder polyvinylidene fluoride (PVDF) were mixed at a mass ratio of 95:2.5:2.5, added with N-methylpyrrolidone (NMP) as a solvent, and stirred thoroughly to mix well to prepare a positive electrode slurry with a solid content of 75wt%. The positive electrode slurry was applied to one surface of a positive electrode current collector aluminum foil with a thickness of 10 µm and dried at 90°C to obtain a positive electrode plate with a positive electrode material layer of 55 µm in thickness coated on one surface. The positive electrode slurry was applied on another surface of the positive electrode current collector aluminum foil and dried. The positive electrode material layer coated on the surface was 55 µm in thickness, then obtaining a positive electrode plate of 120 µm in total thickness with the positive electrode material layer coated on two surfaces. The coated positive electrode plate was cold-pressed and then cut to dimensions of 70 mm × 800 mm for later use. The compacted density of the positive electrode material layer was 4.23 g/cm³.

### <Preparation of electrolyte>

In a glove box filled with a dry argon atmosphere, propylene carbonate (PC), diethyl carbonate (DEC), and ethylene carbonate (EC) were mixed at a mass ratio of 1:1:1 to obtain a base solvent, then lithium hexafluorophosphate (LiPF₆) lithium salt was added to the base solvent, dissolved and mixed well to obtain an electrolyte. Based on a mass of the electrolyte, a mass percentage of LiPF₆ in the electrolyte was 12%, and the remainder was the base solvent.

### <Preparation of lithium-ion battery>

The prepared positive electrode plate, the first separator, the negative electrode plate, and the second separator were stacked in sequence, then wound to obtain an electrode assembly. An aluminum tab as a positive electrode tab was led out by spot welding, and a nickel tab as a negative electrode tab was led out by spot welding, where the first negative electrode material layer was close to the first separator, and the second negative electrode material layer was close to the second separator. The electrode assembly was placed into an aluminum-plastic film and dried in a vacuum oven at 80°C for 12 hours to remove moisture. The prepared electrolyte was injected therein, followed by processes such as vacuum packaging, standing, formation (charged to 3.5 V at a constant current of 0.02C, then charged to 3.9 V at a constant current of 0.1C), capacity testing, and shaping to obtain a lithium-ion battery.

### Examples 1-2 to 1-10

These examples were the same as Example 1-1 except that the related preparation parameters were adjusted according to Table 1.

### Example 1-11

This example was the same as Example 1-1 except that the lithium-ion battery was prepared using steps below.

### <Preparation of lithium-ion battery>

The prepared positive electrode plate, first separator, negative electrode plate, and second separator were stacked in sequence and wound to obtain an electrode assembly. An aluminum tab as a positive electrode tab was led out by spot welding, and a nickel tab as a negative electrode tab was led out by spot welding, where the first negative electrode material layer was close to the second separator, and the second negative electrode material layer was close to the first separator. The electrode assembly was placed into an aluminum-plastic film and dried in a vacuum oven at 80°C for 12 hours to remove moisture. The prepared electrolyte was injected therein, followed by processes such as vacuum packaging, standing, formation (charged to 3.5 V at a constant current of 0.02C, then charged to 3.9 V at a constant current of 0.1C), capacity testing, and shaping to obtain a lithium-ion battery.

### Example 1-12

This example was the same as Example 1-1 except that the first separator was prepared using steps below and a surface of the first separator coated with only the first bonding layer was made close to the negative electrode plate in the <Preparation of lithium-ion battery>.

### <Preparation of first separator>

A non-woven fabric film with thickness H1 of 12 µm was used as a first base film, the non-woven fabric film was made of polyethylene terephthalate, and a porosity P1 of the first base film was 55% (Manufacturer: DuPont, Grade: FR543).

First binder polyvinylidene fluoride-hexafluoropropylene copolymer (PVDF-HFP, Mw = 8.5 × 10⁶) and first thickener sodium carboxymethyl cellulose (Mw = 8 × 10⁵) were mixed at a mass ratio of 98.5:1.5, added with deionized water as a solvent, and stirred well to form a first bonding layer slurry with a solid content of 75wt%.

First ceramic particles aluminum oxide (Al₂O₃), third binder styrene-butadiene rubber (Mw = 7 × 10⁶), and solvent deionized water were mixed at a mass ratio of 35:10:55 to obtain a first ceramic coating slurry.

The first bonding layer slurry was applied to one surface of a first base film and dried at 60°C to form a first bonding layer on one surface of the first base film. The first ceramic coating slurry was applied firstly to another surface of the first base film and dried at 60°C to form a first ceramic coating on the another surface of the first base film; and then the first bonding layer slurry was applied to a surface of the first ceramic coating away from the first base film and dried to form another first bonding layer on the surface of the first ceramic coating away from the first base film, thereby preparing a first separator, where average particle size D1 of the first binder was 8 µm, coating weight CW1 of the first bonding layer was 0.001 mg/mm², and a coating weight of the first ceramic coating is 0.09 mg/mm².

### Example 1-13

This example was the same as Example 1-1 except that the second separator was prepared using steps below and a surface of the second separator coated with only the second bonding layer was made close to the negative electrode plate in the

### <Preparation of lithium-ion battery>.

### <Preparation of second separator>

A microporous film with a thickness H2 of 7 µm was used as a second base film, the microporous film was made of polypropylene and polyethylene, where a mass ratio of polypropylene to polyethylene was 1:1, and a porosity P2 of the second base film was 18% (Manufacturer: Celgard, Grade: 2325).

Second binder polyimide (PI, Mw = 6 × 10⁵) and second thickener sodium carboxymethyl cellulose (Mw = 8 × 10⁵) were mixed at a mass ratio of 98.5:1.5, added with deionized water as a solvent, and stirred well to form a second bonding layer slurry with a solid content of 75wt%.

Second ceramic particles aluminum oxide (Al₂O₃), fourth binder styrene-butadiene rubber (Mw = 7 × 10⁶), and solvent deionized water were mixed at a mass ratio of 35:10:55 to obtain a second ceramic coating slurry.

The second bonding layer slurry was applied to one surface of a second base film and dried at 60°C to form a second bonding layer on one surface of the second base film. The second ceramic coating slurry was applied firstly to another surface of the second base film and dried at 60°C to form a second ceramic coating on the another surface of the second base film; and then the second bonding layer slurry was applied to a surface of the second ceramic coating away from the second base film and dried to form another second bonding layer on the surface of the second ceramic coating away from the second base film, thereby preparing a second separator, where average particle size D2 of the second binder was 15 µm, coating weight CW2 of the second bonding layer was 0.0005 mg/mm², and a coating weight of the second ceramic coating is 0.09 mg/mm².

### Example 1-14

This example was the same as Example 1-1 except that the lithium-ion battery was prepared using the first separator in Example 1-12, the second separator in Example 1-13, and steps below.

### <Preparation of lithium-ion battery>

The prepared positive electrode plate, first separator, negative electrode plate, and second separator were stacked in sequence and wound to obtain an electrode assembly. An aluminum tab as a positive electrode tab was led out by spot welding, and a nickel tab as a negative electrode tab was led out by spot welding, where a surface of the first separator coated with only the first bonding layer was close to the negative electrode plate, a surface of the second separator coated with only the second bonding layer was close to the negative electrode plate, the first negative electrode material layer was close to the first separator, and the second negative electrode material layer was close to the second separator. The electrode assembly was placed into an aluminum-plastic film and dried in a vacuum oven at 80°C for 12 hours to remove moisture. The prepared electrolyte was injected therein, followed by processes such as vacuum packaging, standing, formation (charged to 3.5 V at a constant current of 0.02C, then charged to 3.9 V at a constant current of 0.1C), capacity testing, and shaping to obtain a lithium-ion battery.

### Examples 2-1 to 2-4

These examples were the same as example 1-1 except that the related preparation parameters were adjusted according to Table 2.

### Examples 2-5 to 2-8

These examples were the same as example 1-1 except that the coating amount of the first bonding layer slurry was adjusted to achieve the coating weight of the first bonding layer as shown in Table 2, and that the coating amount of the second bonding layer slurry was adjusted to achieve the coating weight of the second bonding layer as shown in Table 2.

### Examples 3-1 to 3-8

These examples were the same as example 1-1 except that the related preparation parameters were adjusted according to Table 3.

### Comparative Examples 1 to 6

These examples were the same as Example 1-1 except that the related preparation parameters were adjusted according to Table 1.

The preparation parameters and performance parameters of examples and comparative examples are shown in Table 1 and Table 3.

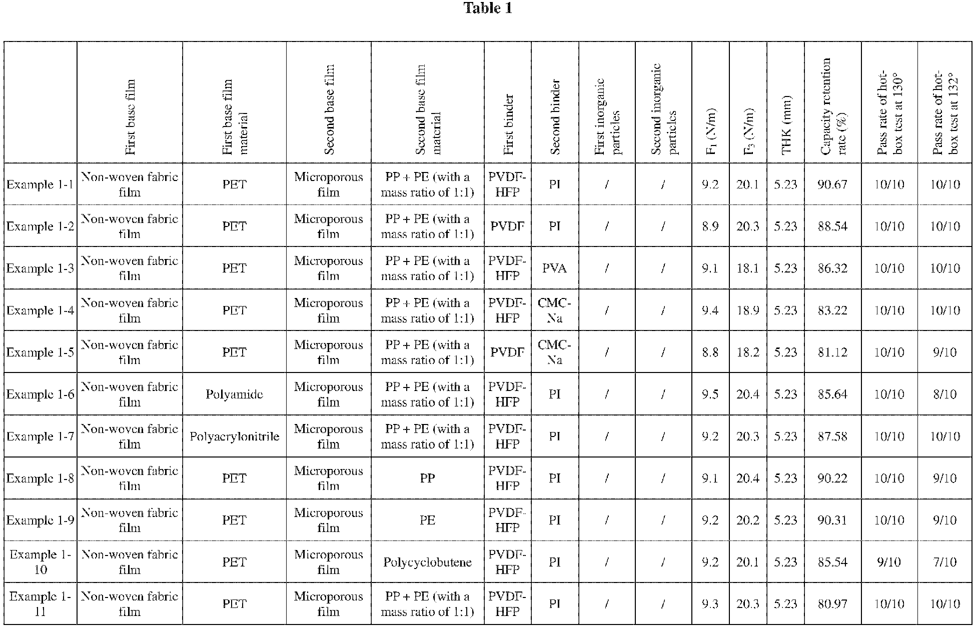

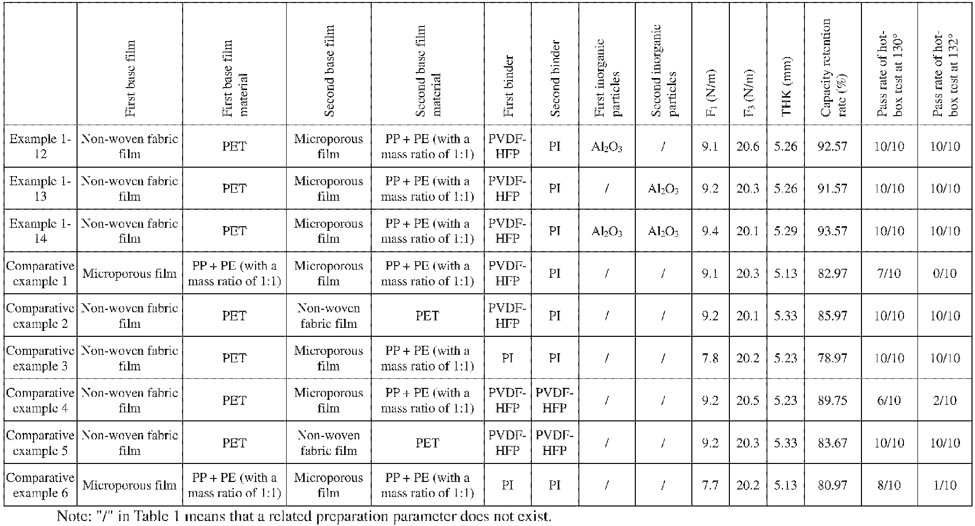

From Examples 1-1 to 1-14, and Comparative examples 1 to 6, it can be seen that the electrode assembly of the secondary battery is a wound structure, with the first separator and the second separator used in combination, the first base film being a non-woven fabric film, and the second base film being a microporous film. With the types of the first binder and the second binder being controlled within the ranges in this application, the adhesive between the first separator and the positive electrode plate and between the second separator and the negative electrode plate is high. The capacity retention rate of the lithium-ion battery after 1000 cycles is high, the pass rate of hot-box test at 130°C and 132°C is high, and the thickness of the lithium-ion battery is small. This indicates that in the lithium-ion battery of this application, the adhesion between the separator and the positive electrode plate and between the separator and the negative electrode plate is high, and that the lithium-ion battery has good cycling performance, high-temperature hot-box performance, and a high energy density. As compared with Example 1-1, in Comparative example 1, the first base film uses a microporous film, the thickness of the microporous film is relatively small, and the thickness of the lithium-ion battery is small. However, the porosity of the microporous film is low, the amount of electrolyte stored is less, and this is not conducive to the cycling performance of the lithium-ion battery. In addition, the microporous film is relatively small in mechanical strength and shrinks significantly at high temperatures. Therefore, the high-temperature hot-box performance of Comparative example 1 is also poor. As compared with Example 1-1, in Comparative example 2, the second base film uses a non-woven fabric film, and the thickness of the non-woven fabric film is relatively large, so the lithium-ion battery is thicker, and the energy density of the lithium-ion battery is lower. In addition, the transport path of lithium ions is longer, and the cycling performance of the lithium-ion battery is worse. As compared with Example 1-1, in Comparative example 3, because PI has small swelling and low adhesion under normal temperature, the adhesion of the first separator to the positive electrode plate is low. The ionic conductivity of PI is low, and the cycling performance of the lithium-ion battery is poor. As compared with Example 1-1, in Comparative example 4, PVDF-HFP has a low melting point and poor thermal stability at high temperatures, resulting in poor high-temperature hot-box performance of the lithium-ion battery. As compared with Example 1-1, in Comparative example 5, the lithium-ion battery is thicker, and the energy density of the lithium-ion battery is lower. In addition, the transport path of lithium ions is longer, and the cycling performance of the lithium-ion battery is worse. As compared with Example 1-1, in Comparative example 6, the thickness of the microporous film is relatively small, and the thickness of the lithium-ion battery is small. However, the porosity of the microporous film is low, and the ionic conductivity of PI is also low. The combination of the microporous film and PI used in the first separator cannot effectively improve the cycling performance of the lithium-ion battery. In addition, the microporous film is relatively small in mechanical strength and shrinks significantly at high temperatures, resulting that the high-temperature hot-box performance of Comparative example 6 is also poor.

The structure of the electrode assembly generally affects the safety performance, high-temperature hot-box performance, cycling performance, and energy density of the lithium-ion battery. From Example 1-1 and Example 1-11, it can be seen that when the structure of the electrode assembly is within the range in this application, the capacity retention rate of the lithium-ion battery after 1000 cycles is high, indicating that the lithium-ion battery of this application has good cycling performance.

The first separator further includes a first ceramic coating, the first ceramic coating including first ceramic particles, and the type of the first ceramic particles generally affects the high-temperature hot-box performance of the lithium-ion battery. From Example 1-1 and Example 1-12, it can be seen that when the first separator further includes a first ceramic coating, the first ceramic coating including first ceramic particles, and the type of the first ceramic particles is within the range in this application, the lithium-ion battery is thicker, the capacity retention rate of the lithium-ion battery after 1000 cycles is high, and the pass rate of hot-box test at 130°C and 132°C is high. This indicates that the lithium-ion battery of this application has good high-temperature hot-box performance, good cycling performance, and high adhesion between the first separator and the positive electrode plate and between the second separator and the negative electrode plate.

The second separator further includes a second ceramic coating, the second ceramic coating including second ceramic particles, and the type of the second ceramic particles generally affects the high-temperature hot-box performance of the lithium-ion battery. From Example 1-1 and Example 1-13, it can be seen that when the second separator further includes a second ceramic coating, the second ceramic coating including second ceramic particles, and the type of the second ceramic particles is within the range in this application, the lithium-ion battery is thicker, the capacity retention rate of the lithium-ion battery after 1000 cycles is high, and the pass rate of hot-box test at 130°C and 132°C is high. This indicates that the lithium-ion battery of this application has good high-temperature hot-box performance, good cycling performance, and high adhesion between the first separator and the positive electrode plate and between the second separator and the negative electrode plate.

The first separator further includes a first ceramic coating, the first ceramic coating including first ceramic particles; the second separator further includes a second ceramic coating, the second ceramic coating including second ceramic particles. The type of the first ceramic particles and the type of the second ceramic particles generally affect the high-temperature hot-box performance of the lithium-ion battery. From Example 1-1 and Example 1-14, it can be seen that when the first separator further includes a first ceramic coating, the first ceramic coating including first ceramic particles, the type of the first ceramic particles is within the range in this application, the second separator further includes a second ceramic coating, the second ceramic coating including second ceramic particles, and the type of the second ceramic particles is within the range in this application, the lithium-ion battery is thicker, the capacity retention rate of the lithium-ion battery after 1000 cycles is high, and the pass rate of hot-box test at 130°C and 132°C is high. This indicates that the lithium-ion battery of this application has good high-temperature hot-box performance, good cycling performance, and high adhesion between the first separator and the positive electrode plate and between the second separator and the negative electrode plate.

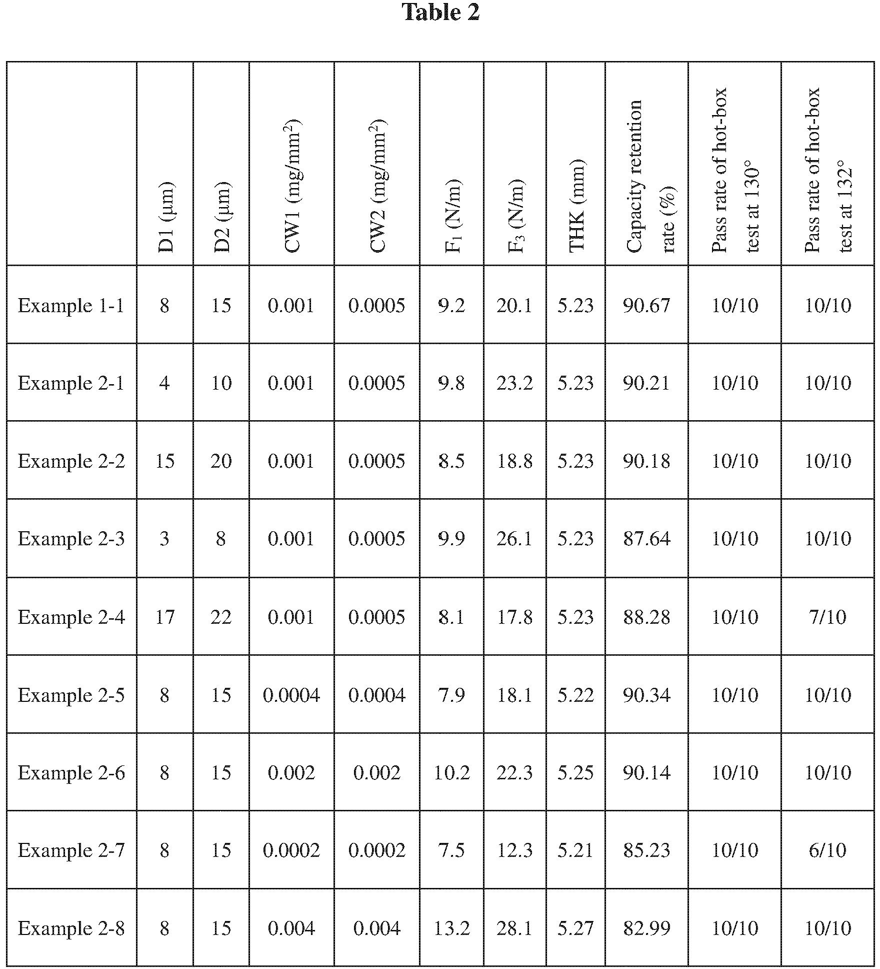

The average particle size D1 of the first binder and the average particle size D2 of the second binder generally affect the adhesion between the separator and the positive electrode plate and between the separator and the negative electrode plate, and also affect the cycling performance and high-temperature hot-box performance of the lithium-ion battery. From Example 1-1 and Examples 2-1 to 2-4, it can be seen that as the average particle size of the first binder increases, the contact area between the first binder and the positive electrode active material particles decreases, and the adhesion of the first separator to the positive electrode plate decreases, and as the average particle size of the second binder increases, the contact area between the second binder and the negative electrode active material particles decreases, and the adhesion of the second separator to the negative electrode plate decreases. When the average particle size D1 of the first binder and the average particle size D2 of the second binder are within the range in this application, the capacity retention rate of the lithium-ion battery after 1000 cycles is high, the pass rate of hot-box test at 130°C and 132°C is high, and the thickness of the lithium-ion battery is small. This indicates that the lithium-ion battery of this application has good cycling performance, good high-temperature hot-box performance, and a high energy density.

The coating weight CW1 of the first bonding layer and the coating weight CW2 of the second bonding layer generally affect the adhesion between the separator and the positive electrode plate and between the separator and the negative electrode plate, affecting the cycling performance of the lithium-ion battery. From Example 1-1 and Examples 2-5 to 2-8, it can be seen that as the coating weight of the first bonding layer increases, the percentage of the first binder per unit area increases, and the adhesion between the first separator and the positive electrode plate increases. As the coating weight of the second bonding layer increases, the percentage of the second binder per unit area increases, and the adhesion between the second separator and the positive electrode plate increases. When the coating weight CW1 of the first bonding layer and the coating weight CW2 of the second bonding layer are within the ranges in this application, the capacity retention rate of the lithium-ion battery after 1000 cycles is high, the pass rate of hot-box test at 130°C and 132°C is high, and the thickness of the lithium-ion battery is small. This indicates that the lithium-ion battery of this application has good cycling performance, good high-temperature hot-box performance, and a high energy density.

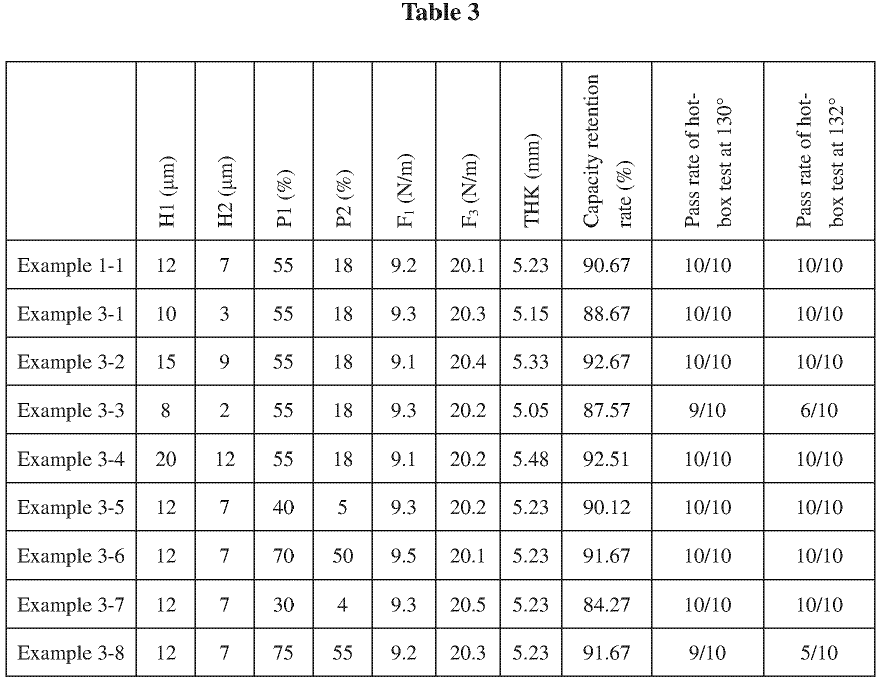

The thickness H1 of the first base film and the thickness H2 of the second base film generally affect the high-temperature hot-box performance, cycling performance, and energy density of the lithium-ion battery. From Example 1-1 and Examples 3-1 to 3-4, it can be seen that when the thickness H1 of the first base film and the thickness H2 of the second base film are within the range in this application, the adhesion between the first separator and the positive electrode plate and between the second separator and the negative electrode plate is high, the capacity retention rate of the lithium-ion battery after 1000 cycles is high, and the pass rate of hot-box test at 130°C and 132°C is high. This indicates that the lithium-ion battery of this application has good high-temperature hot-box performance, good cycling performance, and high adhesion between the first separator and the positive electrode plate and between the second separator and the negative electrode plate. In Example 3-3, the thickness of the first base film and the thickness of the second base film are relatively small, the lithium ions stored therein are relatively few, and the cycling performance of the lithium-ion battery is relatively poor. In addition, the small thickness of the base film results in the base film having low mechanical strength and being prone to shrinkage at high temperatures, so that the high-temperature hot-box performance of the lithium-ion battery is also poor. In Example 3-4, the thickness of the first base film and the thickness of the second base film are relatively large, the thickness of the lithium-ion battery is large, and the energy density of the lithium-ion battery is low.

The porosity P1 of the first base film and the porosity P2 of the second base film generally affect the high-temperature hot-box performance and cycling performance of the lithium-ion battery. From Example 1-1 and Examples 3-5 to 3-8, it can be seen that when the porosity P1 of the first base film and the porosity P2 of the second base film are within the range in this application, the capacity retention rate of the lithium-ion battery after 1000 cycles is high, the pass rate of hot-box test at 130°C and 132°C is high, and the thickness of the lithium-ion battery is small. This indicates that the lithium-ion battery of this application has good high-temperature hot-box performance, good cycling performance, and a high energy density. In Example 3-7, the porosity of the first base film and the porosity of the second base film are relatively small, and the amount of electrolyte stored in the first separator and the second separator is relatively small. This is not conducive to the transport of lithium ions, so that the cycling performance of the lithium-ion battery is poor. In Example 3-8, the porosity of the first base film and the porosity of the second base film are relatively large, and the amount of electrolyte stored in the first separator and the second separator is relatively large. This is conducive to the transport of lithium ions, so that the cycling performance of the lithium-ion battery is good. However, excessive porosity results in the separator having poor mechanical strength and significantly shrinking at high temperatures and the lithium-ion battery having poor high-temperature hot-box performance.

It should be noted that relational terms such as "first" and "second" herein are only used to distinguish one entity or operation from another entity or operation, and do not necessarily require or imply that there is any such actual relationship or order between these entities or operations. In addition, the terms "include," "comprise," or any of their variants are intended to cover a non-exclusive inclusion, such that a process, method, or article that includes a series of elements includes not only those elements but also other elements that are not expressly listed, or further includes elements inherent to such process, method, or article.

Some embodiments in this specification are described in a related manner. For a part that is the same or similar between these embodiments, reference may be made between these embodiments. Each embodiment focuses on differences from other embodiments.

The foregoing descriptions are merely preferred embodiments of this application, and are not intended to limit this application.

## Claims

1. A secondary battery, comprising an electrode assembly (100), **characterized in that**,
the electrode assembly (100) is a wound structure, the electrode assembly (100) comprises a positive electrode plate (40), a negative electrode plate (30), a first separator (10), and a second separator (20), the negative electrode plate (30) is located between the first separator (10) and the second separator (20), the first separator (10) is located between the positive electrode plate (40) and the negative electrode plate (30), the first separator (10) comprises a first base film (11) and a first bonding layer (12), the second separator (20) comprises a second base film (21) and a second bonding layer (22), the first bonding layer (12) comprises a first binder, and the second bonding layer (22) comprises a second binder;
the first base film (11) is a non-woven fabric film; the first base film (11) comprises at least one of polyimide, polyamide, polysulfone, polyacrylonitrile, polyester, cellulose, polyether ether ketone, polyphenylene sulfide, polyacrylate, polyethylene terephthalate, polyphthalamide, polyarylether sulfone, aramid, or polysulfonamide;
the first binder comprises at least one of polyvinylidene fluoride or polyvinylidene fluoride-hexafluoropropylene copolymer;
the second base film (21) is a microporous film, the second base film (21) comprises polyolefin; a polymer monomer of the polyolefin comprises at least one of ethylene, propylene, 1-butene, 1-pentene, 1-hexene, 1-octene, 4-methyl-1-pentene, cyclobutene, cyclopentene, or cyclohexene; and
the second binder comprises at least one of polyimide, polyvinyl alcohol, or sodium carboxymethyl cellulose.

2. The secondary battery according to claim 1, **characterized in that**, the first base film (11) comprises polyethylene terephthalate, and the first binder comprises polyvinylidene fluoride-hexafluoropropylene copolymer; and
the second base film (21) comprises polyolefin, the polymer monomer of the polyolefin comprises at least one of ethylene or propylene, and the second binder comprises polyimide.

3. The secondary battery according to claim 1, **characterized in that**, the negative electrode plate (30) comprises a negative electrode current collector (31) and a first negative electrode material layer (33) and a second negative electrode material layer (34) are located on two sides of the negative electrode current collector (31) respectively; wherein along a winding direction of the electrode assembly (100), a length of the first negative electrode material layer (33) is greater than a length of the second negative electrode material layer (34), the first separator (10) and the first negative electrode material layer (33) are located on a first side of the negative electrode plate (30), and the second separator (20) and the second negative electrode material layer (34) are located on a second side of the negative electrode plate (30).

4. The secondary battery according to any one of claims 1 to 3, **characterized in that**, an average particle size of the first binder is 4 µm to 15 µm, and an average particle size of the second binder is 10 µm to 20 µm, determined as described in the description.

5. The secondary battery according to any one of claims 1 to 3, **characterized in that**, a coating weight of the first bonding layer (12) is 0.0004 mg/mm² to 0.002 mg/mm², and a coating weight of the second bonding layer (22) is 0.0004 mg/mm² to 0.002 mg/mm².

6. The secondary battery according to any one of claims 1 to 3, **characterized in that**, a thickness of the first base film (11) is 10 µm to 15 µm, and a thickness of the second base film (21) is 3 µm to 9 µm.

7. The secondary battery according to any one of claims 1 to 3, **characterized in that**, a porosity of the first base film (11) is 40% to 70%, and a porosity of the second base film (21) is 5% to 50%, determined as described in the description.

8. The secondary battery according to any one of claims 1 to 3, **characterized in that**, the first separator (10) further comprises a first ceramic coating (13) located between the first base film (11) and the first bonding layer (12), and/or the second separator (20) further comprises a second ceramic coating (23) located between the second base film (21) and the second bonding layer (22), the first ceramic coating (13) comprises first ceramic particles, the second ceramic coating (23) comprises second ceramic particles, and the first ceramic particles and the second ceramic particles are each independently selected from at least one of aluminum oxide, boehmite, silicon oxide, magnesium oxide, titanium oxide, tin oxide, calcium oxide, zirconium oxide, yttrium oxide, silicon carbide, aluminum hydroxide, magnesium hydroxide, or calcium hydroxide.

9. An electronic apparatus, comprising the secondary battery according to any one of claims 1 to 8.

## Patentansprüche

1. Sekundärbatterie, umfassend eine Elektrodenanordnung (100), **dadurch gekennzeichnet, dass**
die Elektrodenanordnung (100) eine gewickelte Struktur ist, die Elektrodenanordnung (100) eine positive Elektrodenplatte (40), eine negative Elektrodenplatte (30), einen ersten Separator (10) und einen zweiten Separator (20) umfasst, die negative Elektrodenplatte (30) zwischen dem ersten Separator (10) und dem zweiten Separator (20) angeordnet ist, der erste Separator (10) zwischen der positiven Elektrodenplatte (40) und der negativen Elektrodenplatte (30) angeordnet ist, der erste Separator (10) eine erste Basisfolie (11) und eine erste Klebeschicht (12) umfasst, der zweite Separator (20) eine zweite Basisfolie (21) und eine zweite Klebeschicht (22) umfasst, die erste Klebeschicht (12) ein erstes Bindemittel umfasst und die zweite Klebeschicht (22) ein zweites Bindemittel umfasst;
die erste Basisfolie (11) eine Vliesstofffolie ist; die erste Basisfolie (11) mindestens eines von Polyimid, Polyamid, Polysulfon, Polyacrylnitril, Polyester, Cellulose, Polyetheretherketon, Polyphenylensulfid, Polyacrylat, Polyethylenterephthalat, Polyphthalamid, Polyarylethersulfon, Aramid oder Polysulfonamid umfasst;
das erste Bindemittel mindestens eines von Polyvinylidenfluorid oder Polyvinylidenfluorid-Hexafluorpropylen-Copolymer umfasst;
die zweite Basisfolie (21) eine mikroporöse Folie ist, die zweite Basisfolie (21) Polyolefin umfasst; ein Polymermonomer des Polyolefins mindestens eines von Ethylen, Propylen, 1-Buten, 1-Penten, 1-Hexen, 1-Octen, 4-Methyl-1-penten, Cyclobuten, Cyclopenten oder Cyclohexen umfasst; und
das zweite Bindemittel mindestens eines von Polyimid, Polyvinylalkohol oder Natriumcarboxymethylcellulose umfasst.

2. Die Sekundärbatterie nach Anspruch 1, **dadurch gekennzeichnet, dass** die erste Basisfolie (11) Polyethylenterephthalat umfasst und das erste Bindemittel Polyvinylidenfluorid-Hexafluorpropylen-Copolymer umfasst; und
die zweite Basisfolie (21) Polyolefin umfasst, das Polymermonomer des Polyolefins mindestens eines von Ethylen oder Propylen umfasst und das zweite Bindemittel Polyimid umfasst.

3. Die Sekundärbatterie nach Anspruch 1, **dadurch gekennzeichnet, dass** die negative Elektrodenplatte (30) einen negativen Elektrodenstromkollektor (31) umfasst und eine erste negative Elektrodenmaterialschicht (33) und eine zweite negative Elektrodenmaterialschicht (34) sich jeweils auf zwei Seiten des negativen Elektrodenstromkollektors (31) befinden; wobei entlang einer Wickelrichtung der Elektrodenanordnung (100) eine Länge der ersten negativen Elektrodenmaterialschicht (33) größer ist als eine Länge der zweiten negativen Elektrodenmaterialschicht (34), der erste Separator (10) und die erste negative Elektrodenmaterialschicht (33) sich auf einer ersten Seite der negativen Elektrodenplatte (30) befinden und der zweite Separator (20) und die zweite negative Elektrodenmaterialschicht (34) sich auf einer zweiten Seite der negativen Elektrodenplatte (30) befinden.

4. Die Sekundärbatterie nach einem der Ansprüche 1 bis 3, **dadurch gekennzeichnet, dass** eine mittlere Partikelgröße des ersten Bindemittels 4 µm bis 15 µm beträgt und eine mittlere Partikelgröße des zweiten Bindemittels 10 µm bis 20 µm beträgt, bestimmt wie in der Beschreibung beschrieben.

5. Die Sekundärbatterie nach einem der Ansprüche 1 bis 3, **dadurch gekennzeichnet, dass** ein Beschichtungsgewicht der ersten Klebeschicht (12) 0,0004 mg/mm² bis 0,002 mg/mm² beträgt und ein Beschichtungsgewicht der zweiten Klebeschicht (22) 0,0004 mg/mm² bis 0,002 mg/mm² beträgt.

6. Die Sekundärbatterie nach einem der Ansprüche 1 bis 3, **dadurch gekennzeichnet, dass** eine Dicke der ersten Basisfolie (11) 10 µm bis 15 µm beträgt und eine Dicke der zweiten Basisfolie (21) 3 µm bis 9 µm beträgt.

7. Die Sekundärbatterie nach einem der Ansprüche 1 bis 3, **dadurch gekennzeichnet, dass** eine Porosität der ersten Basisfolie (11) 40 % bis 70 % beträgt und eine Porosität der zweiten Basisfolie (21) 5 % bis 50 % beträgt, bestimmt wie in der Beschreibung beschrieben.

8. Die Sekundärbatterie nach einem der Ansprüche 1 bis 3, **dadurch gekennzeichnet, dass** der erste Separator (10) ferner eine erste Keramikbeschichtung (13) umfasst, die zwischen der ersten Basisfolie (11) und der ersten Klebeschicht (12) angeordnet ist, und/oder der zweite Separator (20) ferner eine zweite Keramikbeschichtung (23) umfasst, die zwischen der zweiten Basisfolie (21) und der zweiten Klebeschicht (22) angeordnet ist, die erste Keramikbeschichtung (13) erste Keramikpartikel umfasst, die zweite Keramikbeschichtung (23) zweite Keramikpartikel umfasst und die ersten Keramikpartikel und die zweiten Keramikpartikel jeweils unabhängig voneinander ausgewählt sind aus mindestens einem von Aluminiumoxid, Böhmit, Siliciumoxid, Magnesiumoxid, Titanoxid, Zinnoxid, Calciumoxid, Zirconiumoxid, Yttriumoxid, Siliciumcarbid, Aluminiumhydroxid, Magnesiumhydroxid oder Calciumhydroxid.

9. Elektronisches Gerät, umfassend die Sekundärbatterie nach einem der Ansprüche 1 bis 8.

## Revendications

1. Batterie secondaire, comprenant un ensemble d'électrodes (100), **caractérisée en ce que**
l'ensemble d'électrodes (100) est une structure enroulée, l'ensemble d'électrodes (100) comprend une plaque d'électrode positive (40), une plaque d'électrode négative (30), un premier séparateur (10) et un second séparateur (20), la plaque d'électrode négative (30) est située entre le premier séparateur (10) et le second séparateur (20), le premier séparateur (10) est situé entre la plaque d'électrode positive (40) et la plaque d'électrode négative (30), le premier séparateur (10) comprend un premier film de base (11) et une première couche de liaison (12), le second séparateur (20) comprend un second film de base (21) et une seconde couche de liaison (22), la première couche de liaison (12) comprend un premier liant, et la seconde couche de liaison (22) comprend un second liant ;
le premier film de base (11) est un film non tissé ; le premier film de base (11) comprend au moins l'un parmi polyimide, polyamide, polysulfone, polyacrylonitrile, polyester, cellulose, polyétheréthercétone, polysulfure de phénylène, polyacrylate, polytéréphtalate d'éthylène, polyphtalamide, polyaryléthersulfone, aramide ou polysulfonamide ;
le premier liant comprend au moins l'un parmi polyfluorure de vinylidène ou copolymère polyfluorure de vinylidène-hexafluoropropylène ;
le second film de base (21) est un film microporeux, le second film de base (21) comprend de la polyoléfine ; un monomère de polymère de la polyoléfine comprend au moins l'un parmi éthylène, propylène, 1-butène, 1-pentène, 1-hexène, 1-octène, 4-méthyl-1-pentène, cyclobutène, cyclopentène ou cyclohexène ; et
le second liant comprend au moins l'un parmi polyimide, alcool polyvinylique ou carboxyméthylcellulose sodique.

2. La batterie secondaire selon la revendication 1, **caractérisée en ce que** le premier film de base (11) comprend du polytéréphtalate d'éthylène, et le premier liant comprend du copolymère polyfluorure de vinylidène-hexafluoropropylène ; et
le second film de base (21) comprend de la polyoléfine, le monomère de polymère de la polyoléfine comprend au moins l'un parmi éthylène ou propylène, et le second liant comprend du polyimide.

3. La batterie secondaire selon la revendication 1, **caractérisée en ce que** la plaque d'électrode négative (30) comprend un collecteur de courant d'électrode négative (31) et une première couche de matériau d'électrode négative (33) et une seconde couche de matériau d'électrode négative (34) sont situées respectivement sur deux côtés du collecteur de courant d'électrode négative (31) ; dans laquelle, le long d'une direction d'enroulement de l'ensemble d'électrodes (100), une longueur de la première couche de matériau d'électrode négative (33) est supérieure à une longueur de la seconde couche de matériau d'électrode négative (34), le premier séparateur (10) et la première couche de matériau d'électrode négative (33) sont situés sur un premier côté de la plaque d'électrode négative (30), et le second séparateur (20) et la seconde couche de matériau d'électrode négative (34) sont situés sur un second côté de la plaque d'électrode négative (30).

4. La batterie secondaire selon l'une quelconque des revendications 1 à 3, **caractérisée en ce qu'**une taille moyenne des particules du premier liant est de 4 µm à 15 µm, et une taille moyenne des particules du second liant est de 10 µm à 20 µm, déterminée comme décrit dans la description.

5. La batterie secondaire selon l'une quelconque des revendications 1 à 3, **caractérisée en ce qu'**un poids de revêtement de la première couche de liaison (12) est de 0,0004 mg/mm² à 0,002 mg/mm², et un poids de revêtement de la seconde couche de liaison (22) est de 0,0004 mg/mm² à 0,002 mg/mm².

6. La batterie secondaire selon l'une quelconque des revendications 1 à 3, **caractérisée en ce qu'**une épaisseur du premier film de base (11) est de 10 µm à 15 µm, et une épaisseur du second film de base (21) est de 3 µm à 9 µm.

7. La batterie secondaire selon l'une quelconque des revendications 1 à 3, **caractérisée en ce qu'**une porosité du premier film de base (11) est de 40 % à 70 %, et une porosité du second film de base (21) est de 5 % à 50 %, déterminée comme décrit dans la description.

8. La batterie secondaire selon l'une quelconque des revendications 1 à 3, **caractérisée en ce que** le premier séparateur (10) comprend en outre un premier revêtement céramique (13) situé entre le premier film de base (11) et la première couche de liaison (12), et/ou le second séparateur (20) comprend en outre un second revêtement céramique (23) situé entre le second film de base (21) et la seconde couche de liaison (22), le premier revêtement céramique (13) comprend des premières particules céramiques, le second revêtement céramique (23) comprend des secondes particules céramiques, et les premières particules céramiques et les secondes particules céramiques sont chacune choisies indépendamment parmi au moins l'un des éléments suivants : oxyde d'aluminium, boehmite, oxyde de silicium, oxyde de magnésium, oxyde de titane, oxyde d'étain, oxyde de calcium, oxyde de zirconium, oxyde d'yttrium, carbure de silicium, hydroxyde d'aluminium, hydroxyde de magnésium ou hydroxyde de calcium.

9. Appareil électronique, comprenant la batterie secondaire selon l'une quelconque des revendications 1 à 8.
